(19) Europäisches Patentamt
European Patent Office
Office européen des brevets

(11) EP 2 974 317 B1

(12) **EUROPEAN PATENT SPECIFICATION**

(45) Date of publication and mention of the grant of the patent:
**28.02.2018 Bulletin 2018/09**

(21) Application number: **14763497.6**

(22) Date of filing: **14.03.2014**

(51) Int Cl.:
***H04N 21/226*** *(2011.01)* ***G06F 13/00*** *(2006.01)*
***H04N 21/2343*** *(2011.01)* ***H04N 21/2662*** *(2011.01)*
***G06F 3/14*** *(2006.01)*

(86) International application number:
**PCT/JP2014/057930**

(87) International publication number:
**WO 2014/142354 (18.09.2014 Gazette 2014/38)**

(54) **COMPUTER SYSTEM, DISTRIBUTION CONTROL SYSTEM, DISTRIBUTION CONTROL METHOD, AND COMPUTER-READABLE STORAGE MEDIUM**

COMPUTERSYSTEM, VERTEILUNGSSTEUERUNGSSYSTEM, VERTEILUNGSSTEUERUNGSVERFAHREN UND COMPUTERLESBARES SPEICHERMEDIUM

SYSTÈME INFORMATIQUE, SYSTÈME DE COMMANDE DE DISTRIBUTION, PROCÉDÉ DE COMMANDE DE DISTRIBUTION, ET SUPPORT DE STOCKAGE LISIBLE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2013 JP 2013053936**
**21.02.2014 JP 2014031493**

(43) Date of publication of application:
**20.01.2016 Bulletin 2016/03**

(73) Proprietor: **Ricoh Company, Ltd.**
**Tokyo 143-8555 (JP)**

(72) Inventor: **KASATANI, Kiyoshi**
**Tokyo 143-8555 (JP)**

(74) Representative: **Schwabe - Sandmair - Marx**
**Patentanwälte Rechtsanwalt**
**Partnerschaft mbB**
**Joseph-Wild-Straße 20**
**81829 München (DE)**

(56) References cited:

| | |
|---|---|
| **WO-A1-2012/015654** | **GB-A- 2 476 360** |
| **JP-A- 2002 135 721** | **JP-A- 2007 166 498** |
| **JP-A- 2009 017 535** | **US-A1- 2008 112 489** |
| **US-A1- 2012 075 333** | **US-A1- 2012 133 659** |

- **SATORU IMAI: 'A Real-time Video Processing Platform for Network Value-Added Services' IEICE TECHNICAL REPORT vol. 110, no. 434, 23 February 2011, pages 13 - 17, XP008177929**
- **BASSIOUNI M A ET AL: "ENHANCING ARITHMETIC AND TREE-BASED CODING", INFORMATION PROCESSING & MANAGEMENT, ELSEVIER, BARKING, GB, vol. 25, no. 3, 1 January 1989 (1989-01-01), pages 293-305, XP000892040, ISSN: 0306-4573, DOI: 10.1016/0306-4573(89)90046-0**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 974 317 B1

## Description

TECHNICAL FIELD

The present invention relates to transmission of data to communication terminals such as personal computers and electronic blackboards.

BACKGROUND ART

With the recent widespread use of the Internet, cloud computing has been used in various fields. Cloud computing is a service usage pattern in which users use services (cloud services) provided by a server on the Internet, using a communication terminal connected to the Internet and pay for the service.

When the server provides a service for distributing video data, as illustrated in FIG. 30, the server includes not only a (host) CPU 201 but also a GPU 215. The CPU 201 controls the processing of the entire server, whereas the GPU 215 performs in particular image processing or the like on the video data. As illustrated in FIG. 30, the CPU 201 is connected to a RAM 203 for the CPU 201 through a local bus line 221. The GPU 215 is connected to a RAM 217 for the GPU 215 through a local bus line 222. The CPU 201 and the GPU 215 are connected through an expansion bus line 220. This causes, for example, the CPU 201 to transfer data acquired from outside the server to the GPU 215, the GPU 215 to perform image processing or the like, the GPU 215 to return the data to the CPU 201 again, and the CPU 201 to finally distribute the data to outside the server.

However, although the local bus lines 221, 222 transfer data at high speed, the expansion bus line 220 transfers data at lower speed than the speed to the local bus lines 221, 222. In other words, data is transferred at high speed between a first processor such as the CPU 201 and a first memory such as the RAM 203 for the CPU 201. Data is also transferred at high speed between a second processor such as the GPU 215 and a second memory such as the RAM 217 for the GPU 215. As compared with these transfer speeds, data is transferred at lower speed between the first processor of the CPU 201 and the second processor such as the GPU 215.

As described above, because the data transfer between the first processor such as the CPU and the second processor such as the GPU is performed at low speed, it takes time, after acquiring data from outside a computer (system) by the first processor, to transfer the data to the second processor. This causes a problem in that data transmission from the computer (system) to a communication terminal becomes congested.

US 2008/0112489 A1 discloses a system and method for effectively encoding and decoding electronic information including an encoding system with a tiling module that initially divides source image data into data tiles. A frame differencing module then outputs only altered data tiles to various processing modules that convert the altered data tiles into corresponding tile components. A quantizer performs a compression procedure upon the tile components to generate compressed data according to an adjustable quantization parameter. An adaptive entropy selector then selects one of a plurality of available entropy encoders to most effectively perform an entropy encoding procedure to thereby produce encoded data. The entropy encoder may also utilize a feedback loop to adjust the quantization parameter in light of current transmission bandwidth characteristics.

DISCLOSURE OF INVENTION

It is an object of the present invention to at least partially solve the problems in the conventional technology.

The invention is defined by independent claims 1 and 7. The dependent claims refer to advantageous embodiments.

According to claim 1, there is provided a computer system that includes a first processor; and a second processor configured to perform data communication with the first processor through a predetermined path. The first processor is configured to transfer updated partial data among a plurality of pieces of partial data constituting frame data to the second processor through the predetermined path. The second processor is configured to perform predetermined processing on frame data obtained after merging the transferred partial data into the frame data, and transfer the resultant data to the first processor. The first processor is configured to transmit the frame data transferred from the second processor to the outside.

The above and other objects, features, advantages and technical and industrial significance of this invention will be better understood by reading the following detailed description of presently preferred embodiments of the invention, when considered in connection with the accompanying drawings.

BRIEF DESCRIPTION OF DRAWINGS

FIG. 1 is a schematic diagram of a distribution system according to an embodiment.
FIG. 2 is a conceptual view when a dongle is attached to a communication terminal.
FIG. 3 is a conceptual diagram illustrating a basic distribution method.
FIG. 4 is a conceptual diagram of multicast.
FIG. 5 is a conceptual diagram of multidisplay.
FIG. 6 is a conceptual diagram of composite distribution using a plurality of communication terminals through a distribution control system.
FIG. 7 is a logical hardware configuration diagram of a distribution control system, a communication terminal, a terminal management system, and a web server.
FIG. 8 is a logical hardware configuration diagram of the dongle.
FIG. 9 is a functional block diagram illustrating mainly the functions of the distribution control system.
FIG. 10 is a functional block diagram illustrating mainly the functions of the communication terminal.
FIG. 11 is a functional block diagram illustrating the functions of the terminal management system.
FIG. 12 is a conceptual view of a distribution destination selection menu screen.
FIG. 13 is a conceptual view of a terminal management table.
FIG. 14 is a conceptual view of an available terminal management table.
FIG. 15 is a detailed diagram of an encoder bridge unit.
FIG. 16 is a functional block diagram illustrating the functions of a converter.
FIG. 17 is a sequence diagram illustrating basic distribution processing of the distribution control system.
FIG. 18 is a sequence diagram illustrating communication processing using a plurality of communication terminals through the distribution control system.
FIG. 19 is a sequence diagram illustrating the processing of time adjustment.
FIG. 20 is a sequence diagram illustrating the processing of channel adaptive control on data transmitted from the distribution control system to the communication terminal.
FIG. 21 is a sequence diagram illustrating the processing of channel adaptive control on data transmitted from the communication terminal to the distribution control system.
FIG. 22 is a sequence diagram illustrating the processing of multidisplay.
FIG. 23 is a sequence diagram illustrating the processing of multidisplay.
FIG. 24 is a sequence diagram illustrating the processing of multidisplay.
FIG. 25 is a detail diagram of the browser and the transmission FIFO illustrated in FIG. 9.
FIG. 26 is a flowchart illustrating high-speed processing of frame data.
FIG. 27 is a conceptual diagram illustrating processing in which an encoder bridge unit acquires partial data.
FIG. 28 is a conceptual diagram of I frame data and P frame data.
FIG. 29 illustrates partial data in (a) and differential data in (b).
FIG. 30 is a physical hardware configuration diagram of a server of a conventional type and according to the present embodiment.

## BEST MODE FOR CARRYING OUT THE INVENTION

Described below with reference to the accompanying drawings is a distribution system 1 according to an embodiment. Described below in detail is an invention that causes both a web browser (hereinafter referred to as a "browser") and an encoder to execute in cooperation with each other in the cloud through cloud computing and transmits video data, sound data, and the like to communication terminals.

In the following, "images" include a still image and a moving image. "Videos" basically mean moving images and also include moving images that are stopped to be still images. A "still image (sound)" represents at least either one of a still image and sound. An "image (sound)" represents at least either one of an image and sound. A "video (sound)" represents at least either one of video and sound.

### Outline of the embodiment

Described with reference to FIG. 1 is an outline of the embodiment according to the present invention. FIG. 1 is a schematic diagram of a distribution system according to the present embodiment.

### Outline of system configuration

Described first is an outline of the configuration of the distribution system 1.

As illustrated in FIG. 1, the distribution system 1 according to the present embodiment includes a distribution control system 2, a plurality of communication terminals (5a to 5f), a terminal management system 7, and a web server 8. In the following, any communication terminal among the communication terminals (5a to 5f) can be referred to as a "communication terminal 5". The distribution control system 2, the terminal management system 7, and the web server 8 are all implemented by server computers.

The communication terminal 5 is a terminal used by a user who receives services of the distribution system 1. The communication terminal 5a is a notebook personal computer (PC). The communication terminal 5b is a mobile terminal such as a smartphone or a tablet terminal. The communication terminal 5c is a multifunction peripheral/printer/product (MFP) in which the functions of copying, scanning, printing, and faxing are combined. The communication terminal 5d is a projector. The communication terminal 5e is a TV (video) conference terminal having a camera, a microphone, and a speaker. The communication terminal 5f is an electronic blackboard (whiteboard) capable of electronically converting drawings drawn by a user or the like.

The communication terminal 5 is not only such terminals as illustrated in FIG. 1, but also may be devices communicable through a communication network such as the Internet, including a watch, a vending machine, a car navigation device, a game console, an air conditioner, a lighting fixture, a camera alone, a microphone alone, and a speaker alone.

The distribution control system 2, the communication terminal 5, the terminal management system 7, and the web server 8 can communicate with each other through a communication network 9 including the Internet and a local area network (LAN). Examples of the communication network 9 may include wireless communication networks such as 3rd Generation (3G), Worldwide Interoperability for Microwave Access (WiMAX), and Long-Term Evolution (LTE).

The communication terminal 5d, for example, among the communication terminals 5 does not have a function of communicating with the other terminals or systems through the communication network 9. However, as illustrated in FIG. 2, a user inserts a dongle 99 into an interface such as Universal Serial Bus (USB) or High-Definition Multimedia Interface (HDMI) of the communication terminal 5d, thereby enabling it to communicate with the other terminals and systems. FIG. 2 is a conceptual view when the dongle is attached to the communication terminal.

The distribution control system 2 has a browser 20 in the cloud, and through the function of rendering in the browser 20, acquires a single or a plurality of pieces of content data described in a certain description language and performs rendering on the content data, thereby generating frame data including still image data such as bitmap data made up of red, green, and blue (RGB) and sound data such as pulse code modulation (PCM) data (i.e., still image (sound) data). The content data is data acquired from the web server 8, any communication terminal, and the like and includes image (sound) data in Hypertext Markup Language (HTML) and Cascading Style Sheets (CSS), image (sound) data in MP4 (MPEG-4), and sound data in Advanced Audio Coding (AAC).

The distribution control system 2 has an encoding unit 19 in the cloud, and the encoding unit 19 plays a role as an encoder, thereby converting frame data as still image (sound) data into video (sound) data in the compression coding format such as H.264 (MPEG-4 AVC), H.265, and Motion JPEG.

The terminal management system 7 performs login authentication on the communication terminal 5 and manages contract information and the like of the communication terminal 5. The terminal management system 7 has a function of a Simple Mail Transfer Protocol (SMTP) server for transmitting e-mail. The terminal management system 7 can be embodied as, for example, a virtual machine developed on a cloud service (IaaS: Infrastructure as a Service). It is desirable that the terminal management system 7 be operated in a multiplexed manner to provide service continuity in case of unexpected incidents.

The browser 20 enables real-time communication/collaboration (RTC). The distribution control system 2 includes the encoding unit 19 in FIG. 16 described below, and the encoding unit 19 can perform real-time encoding on frame data output by the browser 20 and output video (sound) data generated through conversion compliant with the H.264 standard or the like. As a result, the processing of the distribution control system 2 is different from, for example, processing in a case in which non real-time video (sound) data recorded in a DVD is read and distributed by a DVD player.

Not only the distribution control system 2, but also the communication terminal 5 may have a browser. In this case, updating the browser 20 of the distribution control system 2 eliminates the need to start up the browsers of the respective communication terminals 5.

Outline of various kinds of distribution methods

Described next is an outline of various distribution methods.

Basic distribution

FIG. 3 is a conceptual diagram illustrating a basic distribution method. In the distribution system 1, as illustrated in FIG. 3, the browser 20 of the distribution control system 2 acquires web content data [A] as image (sound) data from the web server 8 and renders it, thereby generating pieces of frame data [A] as still image (sound) data. An encoder bridge unit 30 including the encoding unit 19 performs encoding and the like on the pieces of frame data [A], thereby converting them into video (sound) data [A] in the compression coding format such as H.264 (an example of transmission data). The distribution control system 2 distributes the video (sound) data [A] converted to the communication terminal 5.

Thus, the distribution control system 2 can distribute even rich web content data to the communication terminal 5 while converting it from the web content data in HTML or the like into the compressed video (sound) data in H.264 or the like in the cloud. As a result, the communication terminal 5 can reproduce the web content smoothly without time and costs for adding the latest browser or incorporating a higher-spec central processing unit (CPU), operating system (OS), random access memory (RAM), and the like.

Future enrichment in web content will only require higher specifications of the browser 20, the CPU, and the like in the distribution control system 2 in the cloud, without the need for higher specifications of the communication terminal 5.

Applying the above distribution method, as illustrated in FIG. 4 to FIG. 6, the distribution system 1 can also distribute web content data to a plurality of sites as video (sound) data. Described below are distribution methods illustrated in FIG. 4 to FIG. 6.

Multicast

FIG. 4 is a conceptual diagram of multicast. As illustrated in FIG. 4, the single browser 20 of the distribution control system 2 acquires the web content data [A] as image (sound) data from the web server 8 and renders it, thereby generating pieces of frame data [A] as still image (sound) data. The encoder bridge unit 30 encodes the pieces of frame data [A], thereby converting them into video (sound) data. The distribution control system 2 then distributes the video (sound) data [A] (an example of transmission data) to a plurality of communication terminals (5f1, 5f2, 5f3).

Thus, the same video (sound) is reproduced at the sites. In this case, the communication terminals (5f1, 5f2, 5f3) do not need to have the same level of display reproduction capability (e.g., the same resolution). The distribution method like this is called, for example, "multicast".

Multidisplay

FIG. 5 is a conceptual diagram of multidisplay. As illustrated in FIG. 5, the single browser 20 of the distribution control system 2 acquires web content data [XYZ] as image (sound) data from the web server 8 and renders it, thereby generating pieces of frame data [XYZ] as still image (sound) data. The encoder bridge unit 30 divides each frame data [XYZ] into a plurality of pieces of frame data ([X], [Y], [Z]) and then encodes them, thereby converting them into a plurality of pieces of video (sound) data ([X], [Y], [Z]). The distribution control system 2 then distributes the video (sound) data [X] (an example of transmission data) to the communication terminal 5f1. Similarly, the distribution control system 2 distributes the video (sound) data [Y] (an example of transmission data) to the communication terminal 5f2 and distributes the video (sound) data [Z] (an example of transmission data) to the communication terminal 5f3.

Thus, for example, even for landscape web content [XYZ], video (sound) is reproduced by the communication terminals 5 in a divided manner. As a result, when the communication terminals (5f1, 5f2, 5f3) are installed in a line, the same effect can be obtained as the reproduction of one piece of large video. In this case, the communication terminals (5f1, 5f2, 5f3) need to have the same level of display reproduction capability (e.g., the same resolution). The distribution method like this is called, for example, "multidisplay".

Composite distribution

FIG. 6 is a conceptual diagram of composite distribution using a plurality of communication terminals through a distribution control system. As illustrated in FIG. 6, the communication terminal 5f1 as an electronic blackboard and a communication terminal 5e1 as a teleconference terminal are used at a first site (the right side in FIG. 6), whereas at a second site (the left side in FIG. 6), the communication terminal 5f2 as an electronic blackboard and a communication terminal 5e2 as a teleconference terminal are used similarly. At the first site, an electronic pen P1 is used for drawing characters and the like with strokes on the communication terminal 5f1. At the second site, an electronic pen P2 is used for drawing characters and the like with strokes on the communication terminal 5f2.

At the first site, video (sound) data acquired by the communication terminal 5e1 is encoded by an encoding unit 60 and is then transmitted to the distribution control system 2. After that, it is decoded by a decoding unit 40 of the distribution control system 2 and is then input to the browser 20. Operation data indicating the strokes drawn on the communication terminal 5f1 with the electronic pen P1 (in this case, coordinate data on the display of the communication terminal 5f1 or the like) is transmitted to the distribution control system 2 to be input to the browser 20. Also at the second site, video (sound) data acquired by the communication terminal 5e2 is encoded by the encoding unit 60 and is then transmitted to the distribution control system 2. After that, it is decoded by the decoding unit 40 of the distribution control system 2 and is then input to the browser 20. Operation data indicating the strokes drawn on the communication terminal 5f2 with the electronic pen P2 (in this case, coordinate data on the display of the communication terminal 5f2 or the like) is transmitted to the distribution control system 2 to be input to the browser 20.

The browser 20 acquires, for example, web content data [A] as a background image displayed on the displays of the communication terminals (5f1, 5f2) from the web server 8. The browser 20 combines the web content data [A], operation data ([p1], [p2]), and video (sound) content data ([E1], [E2]) and renders them, thereby generating pieces of frame data as still image (sound) data in which the pieces of content data ([A], [p1], [p2], [E1], [E2]) are arranged in a desired layout. The encoder bridge unit 30 encodes the pieces of frame data, and the distribution control system 2 distributes video (sound) data indicating the same content ([A], [p1], [p2], [E1], [E2]) to both sites. At the first site, thereby video ([A], [p1], [p2], [E1 (video part)], and [E2 (video part)]) is displayed on the display of the communication terminal 5f1, and sound [E2 (sound part)] is output from the speaker of the communication terminal 5e1. Also at the second site, the video ([A], [p1], [p2], [E1 (video part)], and [E2 (video part)]) is displayed on the display of the communication terminal 5f2, and sound [E1 (sound part)] is output from the speaker of the communication terminal 5e2. At the first site, the sound of the site itself [E1 (sound part)] is not output owing to an echo cancelling function of the communication terminal 5f1. At the second site, the sound of the site itself [E2 (sound part)] is not output owing to an echo cancelling function of the communication terminal 5f2.

Thus, at the first site and the second site, remote sharing processing can be performed that shares the same information in real time at remote sites, thus making the distribution system 1 according to the present embodiment effective in a teleconference or the like.

## Detailed description of the embodiment

The following describes the embodiment in detail with reference to FIG. 7 to FIG. 24.

### Hardware configuration of the embodiment

Described first with reference to FIG. 7 and FIG. 8 is the hardware configuration of the present embodiment. FIG. 7 is a logical hardware configuration diagram of a distribution control system, a communication terminal, a terminal management system, and a web server. FIG. 8 is a logical hardware configuration diagram of a dongle. Because the hardware configuration relating to the communication of the communication terminal is the same as part of the hardware configuration of the communication terminal, the description thereof will be omitted.

As illustrated in FIG. 7, the distribution control system 2 includes: a (host) CPU 201 that controls the entire operation of the distribution control system 2; a read-only memory (ROM) 202 that stores therein a program used for driving the CPU 201 such as IPL; a RAM 203 used as a work area of the CPU 201; an HDD 204 that stores therein various kinds of data such as programs; a hard disk controller (HDC) 205 that controls the reading and writing of the various kinds of data from and into the HDD 204 under the control of the CPU 201; a media drive 207 that controls the reading and writing of data from and into a storage medium 206 such as a flash memory; a display 208 that displays various kinds of information; an interface (I/F) 209 that transmits data through the communication network 9 and to which the dongle 99 is connected; a keyboard 211; a mouse 212; a microphone 213; a speaker 214; a graphics processing unit (GPU) 215; a ROM 216 that stores therein a program used for driving the GPU 215; a RAM 217 used as a work area of the GPU 215; and an expansion bus line 220 such as an address bus or a data bus for electrically connecting the above components as illustrated in FIG. 7. As in the communication terminal 5d as a projector, the GPU may not be provided. Because the hardware configuration of the terminal management system 7 and the web server 8 is the same as the hardware configuration of the distribution control system 2, the description thereof will be omitted.

Described next with reference to FIG. 8 is the hardware configuration of the dongle 99 illustrated in FIG. 2. As illustrated in FIG. 8, the dongle 99 includes: a CPU 91 that controls the entire operation of the dongle 99; a ROM 92 that stores therein a basic input/output program; a RAM 93 used as a work area of the CPU 91; an electrically erasable and programmable ROM (EEPROM) 94 that performs the reading and writing of data under the control of the CPU 91; a GPU 95; a ROM 98a that stores therein a program used for driving the GPU 95; a RAM 98b used as a work area of the GPU 95; an interface I/F 96 for connection to the I/F 209 of the communication terminal 5; an antenna 97a; a communication unit 97 that performs communications by a short-distance wireless technology through the antenna 97a; and a bus line 90 such as an address bus or a data bus for electrically connecting the above units. Examples of the short-distance wireless technology include the Near Field Communication (NFC) standards, Bluetooth (registered trademark), Wireless Fidelity (WiFi), and ZigBee (registered trademark). Because the dongle 99 includes the GPU 95, even when no GPU is included as in the communication terminal 5d, the communication terminal 5 can perform calculation processing needed for graphics display with the dongle 99 attached as illustrated in FIG. 2.

Functional configuration of the embodiment

The functional configuration of the embodiment is described next with reference to FIG. 9 to FIG. 16.

Functional configuration of the distribution control system

Described first with reference to FIG. 9 is the functional configuration of the distribution control system 2. FIG. 9 is a functional block diagram illustrating mainly the functions of the distribution control system. FIG. 9 illustrates a functional configuration where the distribution control system 2 distributes video (sound) data to the communication terminal 5f1, and the distribution control system 2 has the same functional configuration also where the distribution destination is other than the communication terminal 5f1. Although the distribution control system 2 includes a plurality of distribution engine servers, the following describes a case where a single distribution engine server is included, in order to simplify the description.

As illustrated in FIG. 9, the distribution control system 2 has functional components in FIG. 9 implemented by the hardware configuration including a processor such as the CPU 201 or the GPU 215 and the programs illustrated in FIG. 7.

Specifically, the distribution control system 2 includes the browser 20, a transmitter/receiver 21, a browser management unit 22, a transmission first-in first-out (FIFO) buffer 24, a time management unit 25, a time acquisition unit 26, a channel adaptive controller 27, the encoder bridge unit 30, a transmitter/receiver 31, a reception FIFO 34, a recognition unit 35, a delay information acquisition unit 37a, a channel adaptive controller 37b, and the decoding unit 40. The distribution control system 2 further includes a storage unit 2000 implemented by the HDD 204 illustrated in FIG. 7. This storage unit 2000 stores therein recognition information (described below) output from the recognition unit 35 and sent through the browser management unit 22. The content data acquired by the browser 20 can be temporarily stored in the storage unit 2000 as a cache.

Among the above functional components, the browser 20 is a browser that operates within the distribution control system 2. The browser 20 is kept updated along with the enrichment of web content at all times. The browser 20 includes Media Player, Flash Player, JavaScript (registered trademark), CSS, and HTML Renderer. JavaScript includes the standardized product and one unique to the distribution system 1.

Media Player is a browser plug-in for reproducing multimedia files such as video (sound) files within the browser 20. Flash Player is a browser plug-in for reproducing flash content within the browser 20. The unique JavaScript is a JavaScript group that provides the application programming interface (API) of services unique to the distribution system 1. CSS is a technology for efficiently defining the appearance and style of web pages described in HTML. HTML Renderer is an HTML rendering engine.

A renderer renders content data such as web content data as image (sound) data, thereby generating pieces of frame data as still image (sound) data. As illustrated in FIG. 6, the renderer is also a layout engine that lays out a plurality of kinds of content ([A], [p1], [p2], [E1], [E2]).

The distribution system 1 according to the present embodiment provides the browsers 20 within the distribution control system 2, and a cloud browser for use in a user session is selected from the browsers 20. The following describes a case where the single browser 20 is provided, in order to simplify the description.

The transmitter/receiver 21 transmits and receives various kinds of data, various kinds of requests, various kinds of instructions, and the like to and from the terminal management system 7 and the web server 8. For example, the transmitter/receiver 21 acquires web content data from a content site at the web server 8. The transmitter/receiver 21 outputs the various kinds of data acquired from the terminal management system 7 to the functional components within the distribution control system 2 and controls the functional components within the distribution control system 2 based on the various kinds of data, various kinds of requests, various kinds of instructions, and the like acquired from the terminal management system 7. For example, for the browsers 20, the transmitter/receiver 21 outputs a request for switching distribution pattern from the terminal management system 7, to the browser management unit 22. The browser management unit 22 then controls switching from one browser to another browser among the browsers. Based on the request for switching distribution from the terminal management system 7, the transmitter/receiver 21 performs the switching of combinations of the components within the encoder bridge unit 30 illustrated in FIG. 15 and FIG. 16.

The browser management unit 22 manages the browser 20. For example, the browser management unit 22 instructs the browser 20 to start up and exit, and numbers an encoder ID at startup or exit. The encoder ID is identification information that the browser management unit 22 numbers in order to manage the process of the encoder bridge unit 30. The browser management unit 22 numbers and manages a browser ID every time the browser 20 is started up. The browser ID is identification information that the browser management unit 22 numbers in order to manage the process of the browser 20 to identify the browser 20.

The browser management unit 22 acquires various kinds of operation data from the communication terminal 5 through the transmitter/receiver 31 and outputs them to the browser 20. The operation data is data generated through operation events (operations through the keyboard 211, the mouse 212, and the like, strokes with an electronic pen P and the like) on the communication terminal 5. When the communication terminal 5 provides various sensors such as a temperature sensor, a humidity sensor, and an acceleration sensor, the browser management unit 22 acquires sensor information that contains output signals of the sensors from the communication terminal 5 and outputs it to the browser 20. The browser management unit 22 further acquires image (sound) data from the recognition unit 35 and outputs it to the browser 20, and acquires recognition information described below from the recognition unit 35 and stores it in the storage unit 2000. The browser management unit 22 acquires video (sound) data from the reception FIFO buffer 34 and outputs it to the browser 20.

The transmission FIFO 24 is a buffer that stores therein pieces of frame data as still image (sound) data generated by the browser 20.

The time management unit 25 manages time T unique to the distribution control system 2.

The time acquisition unit 26 performs time adjustment processing in conjunction with a time controller 56 in the communication terminal 5 described below. Specifically, the time acquisition unit 26 acquires time information (T) indicating time T in the distribution control system 2 from the time management unit 25, receives time information (t) indicating time t in the communication terminal 5 from the time controller 56 described below through the transmitter/receiver 31 and a transmitter/receiver 51, and transmits the time information (t) and the time information (T) to the time controller 56.

The channel adaptive controller 27 calculates reproduction delay time U based on transmission delay time information (D) and calculates operation conditions such as the frame rate and the data resolution of a converter 10 in the encoder bridge unit 30. This reproduction delay time U is time for delaying reproduction through the buffering of data until being reproduced. In other words, the channel adaptive controller 27 changes the operation of the encoder bridge unit 30 based on the transmission delay time information (D) and the size of the data (e.g., the number of bits or the number of bytes). As described later, the transmission delay time information (D) indicates frequency distribution information based on a plurality of pieces of transmission delay time D1 acquired from a reproduction controller 53 by a delay information acquisition unit 57 of the communication terminal 5. Each piece of transmission delay time D1 indicates time from the point when the video (sound) data is transmitted from the distribution control system 2 to the point when it is received by the communication terminal 5.

The encoder bridge unit 30 outputs pieces of frame data as still image (sound) data generated by the browser 20 to the converter 10 in the encoder bridge unit 30 described below. Respective processings are performed based on the operation conditions calculated by the channel adaptive controller 27. The encoder bridge unit 30 will be described in more detail with reference to FIG. 15 and FIG. 16. FIG. 15 is a detailed diagram of the encoder bridge unit. FIG. 16 is a functional block diagram illustrating the functions of the converter.

As illustrated in FIG. 15, the encoder bridge unit 30 includes a creating/selecting/transferring unit 310, a selecting unit 320, and a plurality of converters (10a, 10b, 10c) provided therebetween. Although the three converters are illustrated here, any number of them may be provided. In the following, any converter is referred to as a "converter 10".

The converter 10 converts the data format of the pieces of frame data as still image (sound) data generated by the browser 20 into a data format of H.264 or the like allowing distribution of the data to the communication terminal 5 through the communication network 9. For that purpose, as illustrated in FIG. 16, the converter 10 includes a trimming unit 11, a resizing unit 12, a dividing unit 13, and the encoding unit 19, thereby perfroming a variety of processings on the frame data. The trimming unit 11, the resizing unit 12, and the dividing unit 13 do not perform any processing on sound data.

The trimming unit 11 performs processing to cut out part of a still image. The resizing unit 12 changes the scale of a still image. The dividing unit 13 divides a still image as illustrated in FIG. 5.

The encoding unit 19 encodes the pieces of frame data as still image (sound) data generated by the browser 20, thereby converting them to distribute video (sound) data to the communication terminal 5 through the communication network 9. When the video is not in motion (when there is no inter-frame update (change)), a skip frame (may be sometimes referred to as frame skip) is thereafter inserted until the video moves to save a band.

When sound data is generated together with still image data by rendering, both pieces of data are encoded, and when only sound data is generated, only encoding is performed to compress data without trimming, resizing, and dividing.

The creating/selecting/transferring unit 310 creates a new converter 10, selects pieces of frame data as still image (sound) data to be input to a converter 10 that is already generated, and transfers the pieces of fram data. In the creation, the creating/selecting/transferring unit 310 creates a converter 10 capable of conversion according to the capability of the communication terminal 5 to reproduce video (sound) data. In the selection, the creating/selecting/transferring unit 310 selects a converter 10 that is already generated. For example, in starting distribution to the communication terminal 5b in addition to distribution to the communication terminal 5a, the same video (sound) data as video (sound) data being distributed to the communication terminal 5a may be distributed to the communication terminal 5b. In such a case, furthermore, when the communication terminal 5b has the same level of capability as the capability of the communication terminal 5a to reproduce video (sound) data, the creating/selecting/transferring unit 310 uses the converter 10a that is already created for the communication terminal 5a, without creating a new converter 10b for the communication terminal 5b. In the transfer, the creating/selecting/transferring unit 310 transferes the pieces of frame data stored in the transmission FIFO 24 to the converter 10.

The selecting unit 320 selects a desired one from the converters 10 that are already generated. The selection by the creating/selecting/transferring unit 310 and the selecting unit 320 allows distribution in various patterns as illustrated in FIG. 6.

The transmitter/receiver 31 transmits and receives various data, requests, and the like to and from the communication terminal 5. This transmitter/receiver 31 transmits various data, requests, and the like to the communication terminal 5 through the communication network 9 from the cloud, thereby allowing the distribution control system 2 to distribute various data, requests, and the like to the communication terminal 5. For example, in the login processing of the communication terminal 5, the transmitter/receiver 31 transmits, to the transmitter/receiver 51 of the communication terminal 5, authentication screen data for prompting a user for a login request. The transmitter/receiver 31 also performs data transmission and data reception to and from user applications of the communication terminal 5 and device applications of the communication terminal 5 by a protocol unique to the distribution system 1 through a Hypertext Transfer Protocol over Secure Socket Layer (HTTPS) server. This unique protocol is an HTTPS-based application layer protocol for transmitting and receiving data in real time without being interrupted between the distribution control system 2 and the communication terminal. The transmitter/receiver 31 also performs transmission response control, real-time data creation, command transmission, reception response control, reception data analysis, and gesture conversion.

The transmission response control is processing to manage an HTTPS session for downloading requested from the communication terminal 5 in order to transmit data from the distribution control system 2 to the communication terminal 5. The response of the HTTPS session for downloading does not end immediately and holds for a certain period of time (one to several minutes). The transmitter/receiver 31 dynamically writes data to be sent to the communication terminal 5 in the body part of the response. In order to eliminate costs for reconnection, another request is allowed to reach from the communication terminal before the previous session ends. By putting the transmitter/receiver 31 on standby until the previous request is completed, overhead can be eliminated even when reconnection is performed.

The real-time data creation is processing to give a unique header to the data of compressed video (and a compressed sound) generated by the encoding unit 19 in FIG. 16 and write it in the body part of HTTPS.

The command transmission is processing to generate command data to be transmitted to the communication terminal 5 and write it in the body part of HTTPS directed to the communication terminal 5.

The reception response control is processing to manage an HTTPS session requested from the communication terminal 5 in order for the distribution control system 2 to receive data from the communication terminal 5. The response of this HTTPS session does not end immediately and is held for a certain period of time (one to several minutes). The communication terminal 5 dynamically writes data to be sent to the transmitter/receiver 31 of the distribution control system 2 in the body part of the request.

The reception data analysis is processing to analyze the data transmitted from the communication terminal 5 by type and deliver the data to a necessary process.

The gesture conversion is processing to convert a gesture event input to the communication terminal 5f as the electronic blackboard by a user with an electronic pen or in handwriting into data in a format receivable by the browser 20.

The reception FIFO 34 is a buffer that stores therein video (sound) data decoded by the decoding unit 40.

The recognition unit 35 performs processing on image (sound) data received from the communication terminal 5. Specifically, for example, the recognition unit 35 recognizes the face, age, sex, and the like of a human or animal based on images taken by a camera 62 for signage. In a workplace, the recognition unit 35 performs name tagging by face recognition and processing of replacing a background image based on images taken by the camera 62. The recognition unit 35 stores recognition information indicating the recognized details in the storage unit 2000. The recognition unit 35 achieves speeding up by performing processing with a recognition expansion board.

The delay information acquisition unit 37a is used for the processing of upstream channel adaptive control and corresponds to the delay information acquisition unit 57 for the communication terminal 5 for use in the processing of downstream channel adaptive control. Specifically, the delay information acquisition unit 37a acquires transmission delay time information (d1) indicating transmission delay time d1 from the decoding unit 40 and holds it for a certain period of time, and when a plurality of pieces of transmission delay time information (d1) are acquired, outputs to the channel adaptive controller 37b transmission delay time information (d) indicating frequency distribution information based on a plurality of pieces of transmission delay time d1. The transmission delay time information (d1) indicates time from the point when the video (sound) data is transmitted from the communication terminal 5 to the point when it is received by the distribution control system 2.

The channel adaptive controller 37b is used for the processing of the upstream channel adaptive control and corresponds to the channel adaptive controller 27 for use in the processing of the downstream channel adaptive control. Specifically, the channel adaptive controller 37b calculates the operation conditions of the encoding unit 60 for the communication terminal 5 based on the transmission delay time information (d). The channel adaptive controller 37b transmits a channel adaptive control signal indicating operation conditions such as a frame rate and data resolution to the encoding unit 60 of the communication terminal 5 through the transmitter/receiver 31 and the transmitter/receiver 51.

The decoding unit 40 decodes the video (sound) data transmitted from the communication terminal 5. The decoding unit 40 also outputs the transmission delay time information (d1) indicating transmission delay time d1 to the delay information acquisition unit 37a.

Functional configuration of communication terminal

The functional configuration of the communication terminal 5 is described with reference to FIG. 10. FIG. 10 is a functional block diagram illustrating mainly the functions of the communication terminal. The communication terminal 5 is a terminal serving as an interface for a user to perform a login to the distribution system 1, start and stop the distribution of video (sound) data, and the like.

As illustrated in FIG. 10, the communication terminal 5 has functional components in FIG. 10 implemented by the hardware configuration including the CPU 201 and the programs illustrated in FIG. 7. When the communication terminal 5 becomes communicable with the other terminals and systems through the communication network 9 by the insertion of the dongle 99 as illustrated in FIG. 2, the communication terminal 5 has the functional components in FIG. 10 implemented by the hardware configuration and the programs illustrated in FIG. 7 and FIG. 8.

Specifically, the communication terminal 5 includes a decoding unit 50, the transmitter/receiver 51, an operating unit 52, the reproduction controller 53, a rendering unit 55, the time controller 56, the delay information acquisition unit 57, a display unit 58, and the encoding unit 60. The communication terminal 5 further includes a storage unit 5000 implemented by the RAM 203 illustrated in FIG. 7. This storage unit 5000 stores therein time difference information (Δ) indicating a time difference Δ described below and time information (t) indicating time t in the communication terminal 5.

The decoding unit 50 decodes video (sound) data distributed from the distribution control system 2 and output from the reproduction controller 53.

The transmitter/receiver 51 transmits and receives various data, requests, and the like to and from the transmitter/receiver 31 of the distribution control system 2 and a transmitter/receiver 71a of the terminal management system 7. For example, in the login processing of the communication terminal 5, the transmitter/receiver 51 performs a login request to the transmitter/receiver 71 of the terminal management system 7 in response to the startup of the communication terminal 5 by the operating unit 52.

The operating unit 52 performs processing to receive operations input by a user, such as input and selection with a power switch, a keyboard, a mouse, the electronic pen P, and the like, and transmits them as operation data to the browser management unit 22 of the distribution control system 2.

The reproduction controller 53 buffers the video (sound) data (a packet of real-time data) received from the transmitter/receiver 51 and outputs it to the decoding unit 50 with the reproduction delay time U taken into account. The reproduction controller 53 also calculates the transmission delay time information (D1) indicating transmission delay time D1, and outputs the transmission delay time information (D1) to the delay information acquisition unit 57.

The rendering unit 55 renders the data decoded by the decoding unit 50.

The time controller 56 performs time adjustment processing in conjunction with the time acquisition unit 26 of the distribution control system 2. Specifically, the time controller 56 acquires time information (t) indicating time t in the communication terminal 5 from the storage unit 5000. The time controller 56 issues a request for time information (T) indicating time T in the distribution control system 2 to the time acquisition unit 26 of the distribution control system 2 through the transmitter/receiver 51 and the transmitter/receiver 31. In this case, the time information (t) is transmitted concurrently with the request for the time information (T).

The delay information acquisition unit 57 acquires from a reproduction controller 53 the transmission delay time information (D1) indicating transmission delay time D1 and holds it for a certain period of time, and when a plurality of pieces of transmission delay time information (D1) are acquired, outputs transmission delay time information (D) indicating frequency distribution information based on a plurality of pieces of transmission delay time D1 to the channel adaptive controller 27 through the transmitter/receiver 51 and the transmitter/receiver 31. The transmission delay time information (D) is transmitted, for example, once in a hundred frames.

The display unit 58 reproduces the data rendered by the rendering unit 55.

The encoding unit 60 transmits video (sound) data [E] that is acquired from a built-in microphone 213 or the camera 62 and a microphone 63 that are externally attached, and is encoded; time information ($t_0$) that indicates the current time $t_0$ in the communication terminal 5 and is acquired from the storage unit 5000; and the time difference information (Δ) that indicates the time difference Δ in between the distribution control system 2 and the communication terminal 5 and is acquired from the storage unit 5000, to the decoding unit 40 of the distribution control system 2 through the transmitter/receiver 51 and the transmitter/receiver 31. The time difference Δ indicates a difference between the time managed independently by the distribution control system 2 and the time managed independently by the communication terminal 5. The encoding unit 60 changes the operation conditions of the encoding unit 60 based on the operation conditions indicated by the channel adaptive control signal received from the channel adaptive controller 37b. The encoding unit 60, in accordance with the new operation conditions, transmits the video (sound) data [E] that is acquired from the camera 62 and the microphone 63 and is encoded; the time information ($t_0$) that indicates the current time $t_0$ in the communication terminal 5 and is acquired from the storage unit 5000; and the time difference information ($\Delta$) that indicates the time difference $\Delta$ and is acquired from the storage unit 5000, to the decoding unit 40 of the distribution control system 2 through the transmitter/receiver 51 and the transmitter/receiver 31.

The built-in microphone 213, the externally attached camera 62 and microphone 63, and the like are examples of an inputting unit and are devices that need encoding and decoding. The inputting unit may output touch data and smell data in addition to video (sound) data.

The inputting unit includes various sensors such as a temperature sensor, a direction sensor, an acceleration sensor, and the like.

Functional configuration of the terminal management system

The functional configuration of the terminal management system 7 is described with reference to FIG. 11. FIG. 11 is a functional block diagram illustrating the functions of the terminal management system.

As illustrated in FIG. 11, the terminal management system 7 has functional components in FIG. 11 implemented by the hardware configuration including the CPU 201 and the programs illustrated in FIG. 7.

Specifically, the terminal management system 7 includes the transmitter/receiver 71a, a transmitter/receiver 71b, and an authentication unit 75. The terminal management system 7 further includes a storage unit 7000 implemented by the HDD 204 illustrated in FIG. 7. The storage unit 7000 stores therein distribution destination selection menu data, a terminal management table 7010, and an available terminal management table 7020.

The distribution destination selection menu is data indicating such a destination selection menu screen as illustrated in FIG. 12.

As illustrated in FIG. 13, the terminal management table 7010 manages the terminal ID of the communication terminal 5, a user certificate, contract information when a user uses the services of the distribution system 1, the terminal type of the communication terminal 5, setting information indicating the home uniform resource locators (URLs) of the respective communication terminals 5, the execution environment information of the communication terminals 5, a shared ID, installation position information, and display name information in association with each other. The execution environment information includes "favorites", "previous Cookie information", and "cache file" of each communication terminal 5, which are sent to the distribution control system 2 together with the setting information after the login of the communication terminal 5 and are used for performing an individual service on the communication terminal 5.

The shared ID is an ID that is used when each user distributes the same video (sound) data as video (sound) data being distributed to his/her own communication terminal 5 to the other communication terminals 5, thereby performing remote sharing processing, and is identification information that identifies the other communication terminals and the other communication terminal group. For example, the shared ID of the terminal ID "t006" is "v006", the shared ID of the terminal ID "t007" is "v006", and the shared ID of the terminal ID "t008" is "v006". When the communication terminal 5a with the terminal ID "tOOl" issues a request for remote sharing processing with the communication terminals (5f1, 5f2, 5f3) with the terminal ID "v006", the distribution control system 2 distributes the same video (sound) data as video (sound) data being distributed to the communication terminals 5a to the communication terminals (5f1, 5f2, 5f3). However, when the communication terminals 5a and the communication terminals (5f1, 5f2, 5f3) are different in the resolution of the display unit 58, the distribution control system 2 distributes the video (sound) data accordingly.

As illustrated in FIG. 5, for example, the installation position information indicates an installation position when the communication terminals (5f1, 5f2, 5f3) are arranged side by side. The display name information is information indicating the details of the display name in the distribution destination selection menu illustrated in FIG. 12.

As illustrated in FIG. 14, the available terminal management table 7020 manages, in association with each terminal ID, a shared ID indicating a communication terminal or a communication terminal group with which the communication terminal 5 indicated by the terminal ID can perform remote sharing processing.

The functional components are described with reference to FIG. 11.

The transmitter/receiver 71a transmits and receives various data, requests, and the like to and from the communication terminal 5. For example, the transmitter/receiver 71a receives a login request from the transmitter/receiver 51 of the communication terminal 5 and transmits an authentication result of the login request to the transmitter/receiver 51.

The transmitter/receiver 71b transmits and receives various data, requests, and the like to and from the distribution control system 2. For example, the transmitter/receiver 71b receives a request for the data of the distribution destination selection menu from the transmitter/receiver 21 of the distribution control system 2 and transmits the data of the distribution destination selection menu to the transmitter/receiver 21.

The authentication unit 75 searches the terminal management table 7010 based on the terminal ID and the user certificate received from the communication terminal 5, thereby determining whether there is the same combination of a terminal ID and a user certificate, thereby authenticating the communication terminal 5.

Operations and processing of the embodiment

Operations and pieces of processing of the present embodiment are described with reference to FIG. 17 to FIG. 24. These pieces of processing are performed by the CPUs of the distribution control system 2, the communication terminal 5, the terminal management system 7, and the web server 8 in accordance with the respective programs stored therein.

Basic distribution processing

Specific distribution processing in the basic distribution method illustrated in FIG. 3 is described with reference to FIG. 17. FIG. 17 is a sequence diagram illustrating the basic distribution processing of the distribution control system. Although described here is a case of issuing a login request through the communication terminal 5a, a login may be performed through the communication terminal 5 other than the communication terminal 5a.

As illustrated in FIG. 17, when a user turns on the communication terminal 5a, the transmitter/receiver 51 of the communication terminal 5a issues a login request to the transmitter/receiver 71a of the terminal management system 7 (Step S21). The transmitter/receiver 71a receives the login request. This login request includes the terminal ID and the user certificate of the communication terminal 5a. The authentication unit 75 then acquires the terminal ID and the user certificate of the communication terminal 5a.

The authentication unit 75 searches the terminal management table 7010 based on the terminal ID and the user certificate, thereby determining whether there is the same combination of a terminal ID and a user certificate, thereby authenticating the communication terminal 5a (Step S22). The following describes a case where the same combination of a terminal ID and a user certificate is present in the terminal management table 7010, that is, where the communication terminal 5a is determined as a valid terminal in the distribution system 1.

The transmitter/receiver 71a of the terminal management system 7 transmits the IP address of the distribution control system 2 to the transmitter/receiver 51 of the communication terminal 5a (Step S23). The IP address of the distribution control system 2 is acquired from the distribution control system 2 by the terminal management system 7 and is stored in the storage unit 7000 in advance.

The transmitter/receiver 71b of the terminal management system 7 issues a startup request of the browser 20 to the transmitter/receiver 21 of the distribution control system 2 (Step S24). The transmitter/receiver 21 receives the startup request of the browser 20. The browser management unit 22 starts up the browser 20 based on the startup request received by the transmitter/receiver 21 (Step S25).

The creating/selecting/transferring unit 310 of the encoder bridge unit 30 creates the converter 10 in accordance with the capability of the communication terminal 5a to reproduce video (sound) data (the resolution of the display and the like) and the type of content (Step S26). Next, the transmitter/receiver 21 issues a request for content data [A] to the web server 8 in accordance with an instruction by the browser 20 (Step S27). In response thereto, the web server 8 reads the requested content data [A] from its own storage unit (not illustrated) '(Step S28). The web server 8 then transmits the content data [A] to the transmitter/receiver 21 of the distribution control system 2 (Step S29).

The browser 20 renders the content data [A] received by the transmitter/receiver 21, thereby generating pieces of frame data as still image (sound) data and outputs them to the transmission FIFO 24 (Step S30). The converter 10 encodes the pieces of frame data stored in the transmission FIFO 24, thereby converting them into video (sound) data [A] to be distributed to the communication terminal 5a (Step S31).

The transmitter/receiver 31 transmits the video (sound) data [A] to the transmitter/receiver 51 of the communication terminal 5a (Step S32). The transmitter/receiver 51 of the communication terminal 5a receives the video (sound) data [A] and outputs it to the reproduction controller 53.

In the communication terminal 5a, the decoding unit 50 acquires the video (sound) data [A] from the reproduction controller 53 and decodes it (Step S33). After that, a speaker 61 reproduces sound based on decoded sound data [A], and the display unit 58 reproduces video based on video data [A] acquired from the decoding unit 50 and rendered by the rendering unit 55 (Step S34).

Processing of composite distribution using a plurality of communication terminals

The following describes communication processing using a plurality of communication terminals through the distribution control system with reference to FIG. 18. FIG. 18 is a sequence diagram illustrating distribution processing using a plurality of communication terminals through the distribution control system. Described here is specific processing for the communication terminals 5 in the pattern illustrated in FIG. 6. Because the processing here includes login processing, browser startup, and the like similar to Steps S21 to S29, description starts with the processing corresponding to Step S29.

As illustrated in FIG. 18, the transmitter/receiver 21 of the distribution control system 2 receives content data [A] from the web server 8 (Step S41). The browser 20 renders the content data [A], thereby generating pieces of frame data as still image (sound) data and outputs them to the transmission FIFO 24 (Step S42).

When the encoding unit 60 of the communication terminal 5f1 receives the input of content data as video (sound) data [E] from the camera 62 and the microphone 63 (Step S43), the encoding unit 60 encodes the content data [E] (Step S44). The transmitter/receiver 51 transmits the content data [E] encoded by the encoding unit 60 to the transmitter/receiver 31 of the distribution control system 2 (Step S45). The transmitter/receiver 31 of the distribution control system 2 receives the content data [E].

The decoding unit 40 of the distribution control system 2 decodes the content data [E] received by the transmitter/receiver 31 and outputs it to the reception FIFO 34 (Step S46). The browser 20 renders the content data [E] stored in the reception FIFO 34, thereby generating frame data [E] as still image (sound) data and outputs it to the transmission FIFO 24 (Step S47). In this case, the browser 20 outputs the data in a layout in which the content data [E] is combined with the content data [A] already acquired.

In addition, when the operating unit 52 of the communication terminal 5f1 receives the input of a stroke operation with the electronic pen P1 (Step S48), the transmitter/receiver 51 transmits operation data [p] indicating the details of the stroke operation received by the operating unit 52 to the transmitter/receiver 31 of the distribution control system 2 (Step S49). The transmitter/receiver 31 of the distribution control system 2 receives the operation data [p]. The browser management unit 22 outputs the operation data [p] received by the transmitter/receiver 31 to the browser 20.

The browser 20 renders the operation data [p], thereby generating frame data [p] as still image (sound) data and outputs it to the transmission FIFO 24 (Step S50). In this case, the browser 20 outputs the data in a layout in which the operation data [p] is combined with the content data ([A], [E]) already acquired.

The converter 10 encodes pieces of frame data ([A], [E], [p]) as still image (sound) data stored in the transmission FIFO 24, thereby converting them into video (sound) data ([A], [E], [p]) to be distributed to the communication terminals 5f1 and 5f2 (Step S51).

The transmitter/receiver 31 acquires the encoded video (sound) data ([A], [E], [p]) from the encoder bridge unit 30 including the converter 10 and transmits it to the transmitter/receiver 51 of the communication terminal 5f1 (Step S52-1). The transmitter/receiver 51 of the communication terminal 5f1 receives the video (sound) data ([A], [E], [p]), and the reproduction controller 53 of the communication terminal 5f1 acquires the video (sound) data ([A], [E], [p]) from the transmitter/receiver 51. In the communication terminal 5f1, the decoding unit 50 acquires the video (sound) data ([A], [E], [p]) from the reproduction controller 53 and decodes it (Step S53-1). After that, the speaker 61 reproduces sound based on decoded sound data ([A], [E]), and the display unit 58 reproduces video based on video data ([A], [E], [p]) acquired from the decoding unit 50 and rendered by the rendering unit 55 (Step S54-1).

For the communication terminal 5f2, as is the case with Step S52-1, the transmitter/receiver 31 acquires the encoded video (sound) data ([A], [E], [p]) from the encoder bridge unit 30 and transmits it to the transmitter/receiver 51 of the communication terminal 5f2 (Step S52-2). The reproduction controller 53 of the communication terminal 5f2 acquires the video (sound) data ([A], [E], [p]). In the communication terminal 5f1, the decoding unit 50 acquires the video (sound) data ([A], [E], [p]) from the reproduction controller 53 and decodes it (Step S53-2). After that, the speaker 61 reproduces sound based on decoded sound data ([A], [E]), and the display unit 58 reproduces video based on video data ([A], [E], [p]) acquired from the decoding unit 50 and rendered by the rendering unit 55 (Step S54-2).

Thus, the same video (sound) as the video (sound) output to the communication terminal 5f1 is output also to the communication terminal 5f2.

Processing of time adjustment

The processing of time adjustment is described with reference to FIG. 19. FIG. 19 is a sequence diagram illustrating the processing of time adjustment.

In order to acquire time indicating when the transmitter/receiver 51 issues a request for the time information (T) to the distribution control system 2, the time controller 56 of the communication terminal 5 acquires time information ($t_s$) in the communication terminal 5 from the storage unit 5000 (Step S81). The transmitter/receiver 51 issues a request for the time information (T) to the transmitter/receiver 31 (Step S82). In this case, the time information ($t_s$) is transmitted concurrently with the request for the time information (T).

In order to acquire time indicating when the transmitter/receiver 31 received the request at Step S82, the time acquisition unit 26 of the distribution control system 2 acquires time information ($T_r$) in the distribution control system 2 from the time management unit 25 (Step S83). In order to acquire time indicating when the transmitter/receiver 31 responds to the request at Step S82, the time acquisition unit 26 further acquires time information (Ts) in the distribution control system 2 from the time management unit 25 (Step S84). The transmitter/receiver 31 then transmits the time information ($t_s$, $T_r$, $T_s$) to the transmitter/receiver 51 (Step S85).

In order to acquire time indicating when the transmitter/receiver 51 received the response at Step S85, the time controller 56 of the communication terminal 5 acquires time information ($t_r$) in the communication terminal 5 from the storage unit 5000 (Step S86).

The time controller 56 of the communication terminal 5 calculates the time difference Δ between the distribution control system 2 and the communication terminal 5 (Step S87). This time difference Δ is given by Equation (1) below.

$$\Delta = ((T_r + T_s)/2) - ((t_r + t_s)/2) \quad (1)$$

The time controller 56 stores the time difference information (Δ) indicating the time difference Δ in the storage unit 5000 (Step S88). The series of processing of time adjustment is performed, for example, regularly every minute.

Processing of downstream channel adaptive control

Described next with reference to FIG. 20 is the processing of channel adaptive control on data transmitted from the distribution control system 2 to the communication terminal 5 (downstream). FIG. 20 is a sequence diagram illustrating the processing of channel adaptive control on data transmitted from the distribution control system to the communication terminal.

First, the channel adaptive controller 27 of the distribution control system 2 calculates reproduction delay time information (U) indicating reproduction delay time U for delaying reproduction by buffering until the reproduction controller 53 of the communication terminal 5 reproduces video (sound) data, and outputs the reproduction delay time information (U) to the encoder bridge unit 30 (Step S101).

The transmitter/receiver 31 then acquires the reproduction delay time information (U) from the encoder bridge unit 30 and transmits it to the transmitter/receiver 51 of the communication terminal 5 (Step S102). The transmitter/receiver 51 of the communication terminal 5 receives the reproduction delay time information (U). The encoder bridge unit 30 adds time information ($T_0$) indicating time $T_0$ acquired from the time management unit 25, as a time stamp to the video (sound) data [A] acquired from the transmission FIFO 24 and encoded, for example (Step S103). The transmitter/receiver 31 transmits the video (sound) data and the time information ($T_0$) of the distribution control system 2 to the transmitter/receiver 51 of the communication terminal 5 (Step S104). The transmitter/receiver 51 of the communication terminal 5 receives the time information ($T_0$) of the distribution control system 2 and outputs the video (sound) data and the time information ($T_0$) to the reproduction controller 53.

In the communication terminal 5, based on the reproduction delay time information (U) acquired at Step S102, the time information ($T_0$) acquired at Step S104, and the time difference information (Δ) stored in the storage unit 5000 at Step S88, the reproduction controller 53 waits until the time ($T_0$+U-Δ) in the communication terminal 5 and then outputs the video (sound) data acquired at Step S104 to the decoding unit 50. This causes the speaker 61 to output sound and the display unit 58 to reproduce video through the rendering unit 55 (Step S105). This causes only video (sound) data received by the communication terminal 5 within the range of the reproduction delay time U given by Equation (2) below to be reproduced, while video (sound) data out of the range is delayed excessively and is deleted without being reproduced.

$$U \geq (t_0 + \Delta) - T_0 \quad (2)$$

The reproduction controller 53 reads the current time $t_0$ in the communication terminal 5 from the storage unit 5000 (Step S106). This time $t_0$ indicates time in the communication terminal 5 when the communication terminal 5 received video (sound) data from the distribution control system 2. The reproduction controller 53 further reads the time difference information (Δ) indicating the time difference Δ stored at Step S86 in the storage unit 5000 (Step S107). The reproduction controller 53 then calculates the transmission delay time D1 indicating time from the point when the video (sound) data is transmitted from the distribution control system 2 to the point when it is received by the communication terminal 5 (Step S108). This calculation is performed with Equation (3) below; when the communication network 9 becomes congested, the transmission delay time D1 becomes longer.

$$D1 = (t_0 + \Delta) - T_0 \quad (3)$$

The delay information acquisition unit 57 acquires transmission delay time information (D1) indicating the transmission delay time D1 from the reproduction controller 53 and holds it for a certain period of time, and when a plurality of pieces of transmission delay time information (D1) are acquired, outputs to the transmitter/receiver 51 the transmission delay time information (D) indicating frequency distribution information based on a plurality of pieces of transmission delay time D1 (Step S109). The transmitter/receiver 51 transmits the transmission delay time information (D) to the transmitter/receiver 31 of the distribution control system 2 (Step S110). The transmitter/receiver 31 of the distribution control system 2 receives the transmission delay time information (D) and outputs the transmission delay time information (D) to the channel adaptive controller 27.

The channel adaptive controller 27 of the distribution control system 2 newly calculates reproduction delay information U' based on the transmission delay time information (D) and calculates the operation conditions such as the frame rate and the data resolution of the converter 10 and outputs them to the encoder bridge unit 30 (Step S111). In other words, the channel adaptive controller 27 changes the operation of the encoder bridge unit 30 based on the transmission delay time information (D) and the size of the data (e.g., the number of bits or the number of bytes).

The transmitter/receiver 31 acquires reproduction delay time information (U') indicating the new reproduction delay time U' calculated at Step S111 from the encoder bridge unit 30 and transmits the reproduction delay time information (U') to the transmitter/receiver 51 of the communication terminal 5 (Step S112). The transmitter/receiver 51 of the communication terminal 5 receives the reproduction delay time information (U').

The converter 10 of the encoder bridge unit 30 changes the operation conditions of the converter 10 based on the channel adaptive control signal indicating the operation conditions (Step S113). For example, when the transmission delay time D1 is excessively long and the reproduction delay time U is made longer in accordance with the transmission delay time D1, reproduction time at the speaker 61 and the display unit 58 becomes delayed excessively. As a result, there is a limit to making the reproduction delay time U longer. In view of this, the channel adaptive controller 27 not only causes the encoder bridge unit 30 to change the reproduction delay time U to be the reproduction delay time U' but also causes the converter 10 to decrease the frame rate of video (sound) data and to decrease the resolution of video (sound) data, thereby addressing the congestion of the communication network 9. This causes the encoder bridge unit 30, as with Step S103, to add the current time information ($T_0$) to the video (sound) data [A] as a time stamp in accordance with the changed operation conditions (Step S104). The video (sound) data is thus added (Step S114). The transmitter/receiver 31 transmits the video (sound) data and the time information ($T_0$) of the distribution control system 2 to the transmitter/receiver 51 of the communication terminal 5 (Step S115). The transmitter/receiver 51 of the communication terminal 5 receives the video (sound) data and the time information ($T_0$) of the distribution control system 2 and outputs the video (sound) data and the time information ($T_0$) to the reproduction controller 53.

In the communication terminal 5, based on the reproduction delay time information (U') acquired at Step S112, the time information ($T_0$) acquired at Step S115, and the time difference information ($\Delta$) stored in the storage unit 5000 at Step S88, the reproduction controller 53 waits until the time ($T_0$+U'-$\Delta$) in the communication terminal 5 and then outputs the video (sound) data to the decoding unit 50, thereby, as with Step S105, causing the speaker 61 to output sound and the display unit 58 to reproduce video through the rendering unit 55 (Step S116). This is followed by the processing at and after Step S106. Thus, the processing of the downstream channel adaptive control is performed continuously.

Processing of upstream channel adaptive control

Described next with reference to FIG. 21 is the processing of channel adaptive control on data transmitted from the communication terminal 5 to the distribution control system 2 (upstream). FIG. 20 is a sequence diagram illustrating the processing of channel adaptive control on data transmitted from the communication terminal to the distribution control system.

First, the encoding unit 60 of the communication terminal 5 encodes content data as video (sound) data [E] input from the camera 62 and the microphone 63 (Step S121). In this situation, the encoding unit 60 acquires the time information ($t_0$) indicating the current time $t_0$ in the communication terminal 5 and the time difference information ($\Delta$) indicating the time difference $\Delta$ from the storage unit 5000 and does not encode them. The transmitter/receiver 51 transmits the video (sound) data [E], the time information ($t_0$), and the time difference information ($\Delta$) to the transmitter/receiver 31 of the distribution control system 2 (Step S122). The transmitter/receiver 31 of the distribution control system 2 receives the video (sound) data [E], the time information ($t_0$), and the time difference information ($\Delta$).

In the distribution control system 2, the decoding unit 40 reads time $T_0$ indicating when the video (sound) data [E] and the like were received at Step S112 from the time management unit 25 (Step S123). The decoding unit 40 then calculates transmission delay time d1 indicating time from the point when the video (sound) data is transmitted from the communication terminal 5 to the point when it is received by the distribution control system 2 (Step S124). This calculation is performed by Equation (4) below; when the communication network 9 becomes congested, the transmission delay time d1 becomes longer.

$$d1 = T_0 - (t_0 + \Delta) \qquad (4)$$

As is the case with the delay information acquisition unit 57, the delay information acquisition unit 37a of the distribution control system 2 acquires transmission delay time information (d1) indicating the transmission delay time d1 from the decoding unit 40 and holds it for a certain period of time, and when a plurality of pieces of transmission delay time information (d1) are acquired, outputs to the channel adaptive controller 37b the transmission delay time information (d) indicating frequency distribution information based on a plurality of pieces of the transmission delay time d1 (Step S125).

Based on the transmission delay time information (d), the channel adaptive controller 37b calculates the operation conditions of the encoding unit 60 (Step S126). The transmitter/receiver 31 transmits a channel adaptive control signal indicating the operation conditions such as a frame rate and data resolution to the transmitter/receiver 51 of the communication terminal 5 (Step S127). The transmitter/receiver 51 of the communication terminal 5 receives the channel adaptive control signal. In other words, in the case of the channel adaptive control illustrated in FIG. 20 (downstream), the channel adaptive control signal is output to the encoder bridge unit 30 within the same distribution control system 2, and in contrast, in the case of the channel adaptive control illustrated in FIG. 21 (upstream), the channel adaptive control signal is transmitted to the communication terminal 5 from the distribution control system 2 through the communication network 9.

Based on the operation conditions received by the transmitter/receiver 51, the encoding unit 60 changes the operation conditions of the encoding unit 60 (Step S128). The encoding unit 60 then performs the same processing as Step S121 based on the new operation conditions (Step S129). The transmitter/receiver 51, as with Step S122, transmits the video (sound) data [E] acquired from the camera 62 and the microphone 63 and encoded, the time information ($t_0$) indicating the current time $t_0$ in the communication terminal 5 acquired from the storage unit 5000, and the time difference information ($\Delta$) indicating the time difference $\Delta$ also acquired from the storage unit 5000 to the transmitter/receiver 31 of the distribution control system 2 (Step S130). The transmitter/receiver 31 of the distribution control system 2 receives the video (sound) data [E], the time information ($t_0$), and the time difference information ($\Delta$). This is followed by the processing at and after Step S123. Thus, the processing of the upstream channel adaptive control is performed continuously.

Processing of multidisplay

The processing of multidisplay is described next with reference to FIG. 22 to FIG. 24. FIG. 22 to FIG. 24 are sequence diagrams illustrating the processing of multidisplay illustrated in FIG. 5.

The following describes an example of reproducing video (sound) [XYZ] being reproduced on the communication terminal 5a also on the communication terminals (5f1, 5f2, 5f3) in a divided manner.

The browser 20 for displaying web content is referred to as a "browser 20a", and the browser 20 for displaying a setting screen for a user is referred to as a "browser 20b". Described first is the processing corresponding to Step S30 in FIG. 17.

First, the browser 20a of the distribution control system 2 renders the web content data [XYZ] acquired from the web server 8, thereby generating pieces of frame data as still image (sound) data and outputs them to the transmission FIFO 24 (Step S201). The converter 10 encodes the pieces of frame data stored in the transmission FIFO 24, thereby converting them into video (sound) data [XYZ] in a data format distributable to the communication terminal 5a (Step S202).

The transmitter/receiver 31 transmits the video (sound) data [XYZ] converted by the converter 10 to the transmitter/receiver 51 of the communication terminal 5a (Step S203). The transmitter/receiver 51 of the communication terminal 5a receives the video (sound) data [XYZ] and outputs it to the reproduction controller 53.

In the communication terminal 5a, the decoding unit 50 acquires the video (sound) data [XYZ] from the reproduction controller 53 and decodes it (Step S204). After that, the speaker 61 reproduces sound based on decoded sound data [XYZ], and the display unit 58 reproduces video based on video data [XYZ] acquired from the decoding unit 50 and rendered by the rendering unit 55 (Step S205).

A screen displayed on the display unit 58 is switched to a menu request screen (not illustrated) by the user of the communication terminal 5a, and the operating unit 52 receives the pressing of a "distribution destination selection menu" (not illustrated) on the menu request screen (Step S206). This causes the transmitter/receiver 51 to transmit a request for switching to the distribution destination selection menu to the transmitter/receiver 71a of the terminal management system 7 (Step S207). The transmitter/receiver 71a of the terminal management system 7 receives the request for switching to the distribution destination selection menu. This request includes the terminal ID of the communication terminal 5a.

The transmitter/receiver 71b transmits a startup request of the browser 20b to the transmitter/receiver 21 of the distribution control system 2 (Step S208). The transmitter/receiver 21 of the distribution control system 2 receives the startup request of the browser 20b and issues the startup request of the browser 20b to the browser management unit 22.

The browser management unit 22 then starts up the browser 20b (Step S209). The creating/selecting/transferring unit 310 of the encoder bridge unit 30 switches the output from the browser 20a to the converter 10 (e.g., the converter 10a) to the output from the browser 20b to the converter 10 (e.g., the converter 10b) (Step S210). When the communication terminal 5a and another communication terminal 5 (e.g., the communication terminal 5b) are sharing the converter 10 (e.g., the converter 10a) to receive the video (sound) data at Step S203, the creating/selecting/transferring unit 310 of the encoder bridge unit 30 newly creates the converter 10 (e.g., the converter 10b), because the other communication terminal 5 (e.g., the communication terminal 5b) is using the converter 10 (e.g., the converter 10a) for the browser 20a.

The transmitter/receiver 21 transmits a request for a distribution destination selection menu to the transmitter/receiver 71b of the terminal management system 7 in accordance with an instruction by the browser 20b (Step S211). In this situation, the terminal ID of the communication terminal 5a is also transmitted. The transmitter/receiver 71b of the terminal management system 7 receives the request for a distribution destination selection menu and outputs the terminal ID of the communication terminal 5a to the storage unit 7000.

In response thereto, the storage unit 7000 of the terminal management system 7 searches the available terminal management table 7020 based on the terminal ID, thereby extracting the corresponding shared ID (Step S212). This shared ID indicates a communication terminal 5 available for the communication terminal 5a to perform remote sharing processing. As illustrated in FIG. 14, because the terminal ID of the communication terminal 5a is "tOOl", the shared IDs to be extracted are "v003" and "v006".

The storage unit 7000 further searches the terminal management table 7010 based on the extracted shared ID, thereby extracting display name information indicating the corresponding display name (Step S213). As illustrated in FIG. 13, the display names corresponding to the extracted shared IDs "v003" and "v006" are "Tokyo head office 10F MFP" and "Osaka exhibition hall 1F multidisplay", respectively.

The transmitter/receiver 71b transmits distribution destination selection menu data [M] as content data to the transmitter/receiver 21 of the distribution control system 2 (Step S214). The transmitter/receiver 21 of the distribution control system 2 receives the distribution destination selection menu data [M] and outputs it to the browser 20b. As illustrated in FIG. 12, this distribution destination selection menu data [M] includes check boxes, shared IDs, and display names.

As illustrated in FIG. 23, the browser 20b renders the content data indicating the distribution destination selection menu data [M] acquired from the terminal management system 7, thereby generating pieces of frame data as still image (sound) data and outputs them to the transmission FIFO 24 (Step S221). The converter 10 encodes the pieces of image (sound) data [M] stored in the transmission FIFO 24, thereby converting them into video (sound) data [M] in a data format distributable to the communication terminal 5a (Step S222).

The transmitter/receiver 31 transmits the video (sound) data [M] converted by the converter 10 to the transmitter/receiver 51 of the communication terminal 5a (Step S223). The transmitter/receiver 51 of the communication terminal 5a receives the video (sound) data [M] and outputs it to the reproduction controller 53.

In the communication terminal 5a, the decoding unit 50 acquires the video (sound) data [M] from the reproduction controller 53 and decodes it (Step S224). After that, the display unit 58 reproduces video as illustrated in FIG. 12 based on the video data [XYZ] acquired from the decoding unit 50 and rendered by the rendering unit 55 (Step S225).

In the distribution destination selection menu illustrated in FIG. 12, when the check box of the shared ID "v006" is checked and the "OK" button is pressed by the user, the operating unit 52 receives the operation input by the user (Step S226).

The transmitter/receiver 51 transmits a check result as operation data to the transmitter/receiver 31 of the distribution control system 2 (Step S227). The transmitter/receiver 31 of the distribution control system 2 receives the check result as operation data and outputs it to the browser 20b.

The browser 20b selects the shared ID from the check result (Step S228). The transmitter/receiver 21 transmits a request for adding a distribution destination, to the transmitter/receiver 71b of the terminal management system 7 in accordance with an instruction by the browser 20b (Step S229). This request for adding a distribution destination includes the shared ID selected at Step S227. The transmitter/receiver 71b of the terminal management system 7 receives the request for adding a distribution destination and outputs the shared ID to the storage unit 7000. The browser 20b then ends (Step S230). This causes the creating/selecting/transferring unit 310 of the encoder bridge unit 30 to switch the output from the browser 20b to the converter 10 back to the output from the browser 20a to the converter 10 (Step S231).

As illustrated in FIG. 24, in the storage unit 7000 of the terminal management system 7, the terminal management table 7010 is searched based on the shared ID sent at Step S229, thereby extracting the corresponding terminal ID and installation position information (Step S241). The transmitter/receiver 71b transmits an instruction to add a distribution destination, to the transmitter/receiver 21 of the distribution control system 2 (Step S242). This instruction to add a distribution destination includes the terminal ID and the installation position information extracted at Step S241. The transmitter/receiver 21 of the distribution control system 2 receives the instruction to add a distribution destination and outputs the instruction to add a distribution destination to the browser management unit 22. Included here are three sets of the terminal ID and the installation position information, that is, the terminal ID and the installation position information being "t006" and "left", respectively, the terminal ID and the installation position information being "t007" and "middle", respectively, and the terminal ID and the installation position information being "t008" and "right", respectively.

The creating/selecting/transferring unit 310 of the encoder bridge unit 30 creates a converter 10 for multidisplay (Step S243). In this case, the creating/selecting/transferring unit 310 of the encoder bridge unit 30 acquires the terminal ID and the installation position information from the browser management unit 22.

The dividing unit 13 of the converter 10 created at Step S243 divides the pieces of frame data [XYZ] as still image (sound) data stored in the transmission FIFO 24, and the encoding unit 19 encodes the divided pieces of frame data (Step S244).

The transmitter/receiver 31 transmits video (sound) data [X] encoded by the encoder bridge unit 30 to the transmitter/receiver 51 of the communication terminal 5f1 based on the terminal ID ("t006") and the installation position information ("left") (Step S245-1). The transmitter/receiver 51 of the communication terminal 5f1 receives the video (sound) data [X] and outputs it to the reproduction controller 53.

In the communication terminal 5f1, the decoding unit 50 acquires the video (sound) data [X] from the reproduction controller 53 and decodes it (Step S246-1). After that, the speaker 61 reproduces sound based on decoded sound data [X], and the display unit 58 reproduces video based on video data [X] acquired from the decoding unit 50 and rendered by the rendering unit 55 (Step S247-1).

Similarly, the transmitter/receiver 31 transmits video (sound) data [Y] encoded by the encoder bridge unit 30 to the transmitter/receiver 51 of the communication terminal 5f2 based on the terminal ID ("t007") and the installation position information ("middle") (Step S245-2). The transmitter/receiver 51 of the communication terminal 5f2 receives the video (sound) data [Y] and outputs it to the reproduction controller 53.

In the communication terminal 5f2, the decoding unit 50 acquires the video (sound) data [Y] from the reproduction controller 53 and decodes it (Step S246-2). After that, the speaker 61 reproduces sound based on decoded sound data [Y], and the display unit 58 reproduces video based on video data [Y] acquired from the decoding unit 50 and rendered by the rendering unit 55 (Step S247-2).

Similarly, the transmitter/receiver 31 transmits video (sound) data [Z] encoded by the encoder bridge unit 30 to the transmitter/receiver 51 of the communication terminal 5f3 based on the terminal ID ("t008") and the installation position information ("right") (Step S235-3). The transmitter/receiver 51 of the communication terminal 5f3 receives the video (sound) data [Z] and outputs it to the reproduction controller 53.

In the communication terminal 5f3, the decoding unit 50 acquires the video (sound) data [Z] from the reproduction controller 53 and decodes it (Step S246-3). After that, the speaker 61 reproduces sound based on decoded sound data [Z], and the display unit 58 reproduces video based on video data [Z] acquired from the decoding unit 50 and rendered by the rendering unit 55 (Step S247-3).

Detailed processing to encode and distribute content data

Described next with reference to FIG. 25 to FIG. 30 is detailed processing to encode and distribute content data. The configuration in FIG. 30 is applied not only in a conventional configuration but also in the present embodiment.

FIG. 25 is a detail diagram of the browser 20 and the transmission FIFO illustrated in FIG. 9. In order to make the relation with Fig. 9 easier to understand, FIG. 25 also illustrates the encoder bridge unit 30. As illustrated in FIG. 25, the browser 20 includes a content describing unit 20a and a renderer 20b. The content describing unit 20a is a storage part in which content data acquired by the browser 20 is described. The renderer 20b performs rendering based on the content data described in the content describing unit 20a.

As illustrated in FIG. 25, the transmission FIFO 24 includes a frame buffer 24a and an update flag storage area 24b. The frame buffer 24a includes a plurality of meshes (computational meshes) that temporarily store therein frame data constituting video data. For ease of description, four wide by three high, that is, a total of 12 meshes (M1 to M12) are illustrated here. A certain mesh among the meshes (M1 to M12) will be represented as a "mesh M" below.

The meshes (M1 to M12) store therein pieces of partial data (D1 to D12), respectively. The mesh M stores therein only partial data indicating an updated part. In other words, the renderer 20b according to the present embodiment divides frame data constituting video data and stores partial data indicating a part differentiated from the previous frame data, that is, an updated part (rectangular parts M1, M2, not a heart-shaped part, in FIG. 29(a) described below) in the corresponding mesh M in the frame buffer 24a. A certain piece of partial data among the pieces of partial data (D1 to D12) will be represented as "partial data D" below.

The update flag storage area 24b includes areas that store therein update flags corresponding to the respective meshes M in the frame buffer 24a. The update flag is an example of update state information indicating the respective update states of the meshes M. For ease of description, a case is illustrated here including storage areas (R1 to R12) corresponding to the respective meshes M of the frame buffer 24a. A certain storage area among the storage areas (M1 to M12) will be represented as an "area M" below. The renderer 20b according to the present embodiment sets a flag "1" in the area M corresponding to the mesh M storing therein the partial data.

Described next with reference to FIG. 26 to FIG. 30 is processing to encode and distribute content data. FIG. 26 is a flowchart illustrating processing to encode and distribute content data.

First, partial data stored in the RAM 203 of the CPU 201 illustrated in FIG. 30 is copied by being transferred to the RAM 215 of the GPU 215 through the local bus line 221, the expansion bus line 220, and the local bus line 222 in this order (Step S301). Described here with reference to FIG. 27 is the above processing at Step S301 in terms of functions. FIG. 27 is a conceptual diagram illustrating processing in which the encoder bridge unit acquires partial data. All pieces of the processing (Steps S401 to S406) in FIG. 27 are executed by the CPU 201.

As illustrated in FIG. 27, the renderer 20b of the browser 20 stores partial data in each mesh M of the frame buffer 24a of the transmission FIFO 24 based on contents described in the content describing unit 20a (Step S401). The renderer 20b stores the partial data D1 in the mesh M1 of the frame buffer 24a and the partial data D5 in the mesh M5 in this example. At the beginning, because there is no previous frame data, and a difference occurs in all parts, the renderer 20b causes all the meshes M of the frame buffer 24a to store therein pieces of partial data constituting frame data. From the second time on, only changed partial frame data is stored.

The renderer 20b stores an update flag "1" in areas R of the update flag storage area 24b corresponding to the meshes M of the frame buffer 24a in which the partial data was stored at Step S401 (Step S402). The update flags are stored in the area R1 and the area R5 in this example.

A creating/selecting/transferring unit 310 of the encoder bridge unit 30 reads the update flag every 1/fps (frame per second) from the update flag storage area 24b (Step S403). The creating/selecting/transferring unit 310 of the encoder bridge unit 30 reads the respective pieces of partial data D from the respective meshes M of the frame buffer 24a corresponding to the respective areas R based on the respective areas R of the update flag storage area 24b in which the update flags have been stored (Step S404). The partial data D1 is read from the mesh M1, and the partial data D5 is read from the mesh M5 in this example.

The creating/selecting/transferring unit 310 of the encoder bridge unit 30 transfers the pieces of partial data D read at Step S404 to the converter 10 (Step S405). This transfer to the converter 10 means the transfer (copying) from the RAM 203 to the RAM 217 illustrated in FIG. 30. In other words, because only the partial data D in the frame data is transferred through the expansion bus line 220, higher speed transfer is enabled than in a case of transferring the frame data.

The creating/selecting/transferring unit 310 of the encoder bridge unit 30 deletes all the update flags stored in the update flag storage area 24b of the transmission FIFO 24 (Step S406). This ends the processing at Step S301.

Subsequently, returning back to FIG. 26, the GPU 215 (the encoding unit 19) performs pieces of the processing at Steps S302, S303; because they are well-known techniques, they will be outlined without detailed description.

As illustrated in FIG. 26, the GPU 215 (the encoding unit 19) merges the partial data D into the frame data before the previous encoding to create the present frame data (Step S302). The GPU 215 (the encoding unit 19) encodes the present frame data into I frame data or P frame data and transfers (copies) the resultant data to the RAM 203 of the CPU 201 (Step S303). In this case, the I frame data or the P frame data is transferred from the GPU 215 to the CPU 201 through the expansion bus line 220 illustrated in Fig. 30; because the I frame data and the P frame data are encoded frame data, they are transferred in a relatively shorter time than in a case in which frame data is transferred from the CPU 201 to the GPU 215. The I frame data and the P frame data generated by encoding are transmitted (distributed) from the encoder bridge unit 30 to the communication terminal 5 through the transmitter/receive 31 illustrated in FIG. 9.

Described here with reference to FIG. 28 and FIG. 29 is a difference between the partial data according to the present embodiment and differential data constituting the P frame data. FIG. 28 is a conceptual diagram of the I frame data and the P frame data. FIG. 29(a) is a conceptual diagram of the partial data, and FIG. 29(b) is a conceptual diagram of the differential data.

Described first, before describing the difference between the partial data and the differential data, are the I frame data and the P frame data. In general, in order to transmit video data through a communication network efficiently, unnecessary data is reduced or removed by video compression techniques. In the video compression techniques, MPEG-4 and H.264, using inter-frame data encoding, predict inter-frame data changes to reduce the amount of video data. This method includes the differential coding technique that compares frame data with frame data to be referred to and encodes only changed pixels. Using this differential coding reduces the number of pixels to be encoded and transmitted. When the thus encoded video data is displayed, it can appear as if each differential data d generated by the differential coding is included in the original video data. In the prediction of the inter-frame data changes, pieces of frame data within the video data are classified into frame types such as the I frame data and the P frame data.

The I frame (intra frame) data is frame data that can be decoded independently without referring to other images. As illustrated in FIG. 28, the first image of the video data is always the I frame data. For ease of description, illustrated here is a case in which the distribution of one piece of I frame data and four pieces of P frame data is repeated. Specifically, the encoding unit 19 generates I frame data M1 constituting the video data, then generates P frame data (M11, M12, M13, M14) constituting the video data, and subsequently generates I frame data M2 constituting the video data, and then generates P frame data (M21, M22, M23, M24) constituting the video data.

The I frame data is used for implementing a starting point of a new user who views video data, a resynchronization point when a problem occurs in a bit stream under transmission, fast forwarding and rewinding, and a random access function. The encoding unit 19 generates the I frame data automatically at regular intervals and generates the I frame data as needed when, for example, a user who views the video data is newly added. Although having the drawback of requiring a larger bit number, the I frame data has the advantage of not causing noise or the like due to a loss of data.

The P frame (predictive inter frame) data, which is constituted by differential data d, is frame data that is encoded with part of the previous I frame data or P frame data referred to by the encoding unit 19. Although having the advantage of requiring a smaller bit number than the I frame data, the P frame data has the drawback of being susceptible to distribution errors, because being in complicated dependence relation with the previous P frame data or I frame data. Because the user datagram protocol (UDP), which makes data transfer at high speed but low quality, is used for distributing video data, the frame data may be lost on a communication network. In this case, the present P frame data is susceptible to distribution errors because the video data distributed to a user (the communication terminal 5) collapses due to an influence of the lost previous P frame data. However, owing to the I frame data periodically inserted, the collapse of the video data is eliminated.

Described next based on the above description, with reference to FIG. 29, is the difference between the partial data according to the present embodiment and the differential data constituting the P frame data. As illustrated in FIG. 29(a), the partial data (D1, D5) illustrated in FIG. 27 is, when the changed part has a heart shape, data indicating the rectangular parts of the meshes (M1, M5) including the heart shape. In contrast, as illustrated in FIG. 29(b), the differential data d is data indicating only the part of the heart shape in the frame data.

Main effects of the embodiment

As described above, in the present embodiment, when frame data is transferred from the CPU 201 as an example of the first processor to the GPU 215 as an example of the second processor in FIG. 30, partial data as an updated part in the frame data is transferred, and the GPU 215 merges the partial data into the previous frame data and then performs certain processing. This can perform certain processing at relatively high speed, even when data transfer between the CPU 201 and the GPU 215 is performed at low speed, thus solving the problem in that data distribution after processing such as encoding from the distribution control system 2 to the communication terminal 5 according to the present embodiment becomes congested.

In the distribution system 1 according to the present embodiment, the distribution control system 2 includes the browser 20 that performs rendering and the encoder bridge unit 30 that performs encoding and the like in the cloud. The browser 20 generates pieces of frame data as still image (sound) data based on content data described in a certain description language. The encoder bridge unit 30 converts the pieces of frame data into video (sound) data distributable through the communication network 9. After that, the distribution control system 2 distributes the video (sound) data to the communication terminal 5. As a result, the communication terminal 5 can smoothly reproduce web content without update of its browser or time and costs for upgrading the specifications of a CPU, an OS, a RAM, and the like. This eliminates the problem in that enriched content increases a load on the communication terminal 5.

In particular, the browser 20 enables real-time communication, and the converter 10 performs real-time encoding on the frame data generated by the browser 20. Consequently, unlike a case in which a DVD player selects and distributes non real-time (that is, pre-encoded) video (sound) data as seen in, for example, on-demand distribution of video (sound) data, the distribution control system 2 renders content acquired immediately before being distributed, thereby generating pieces of frame data and then encoding them. This allows real-time distribution of video (sound) data.

Supplementary description

Although the present embodiment has been described the distribution control system 2, the embodiment may be a computer system that can perform other processing such as transfer regardless of whether performing distribution processing.

Although the above embodiment electrically explains the CPU 201 as an example of the first processor and the GPU 215 as an example of the second processor with a signal line such as the bus line 220, the embodiment is not limited thereto. For example, both the first and the second processors may be CPUs or GPUs. The first and the second processors may communicate with each other through short-range wireless communication such as FeliCa, not through a signal line as an example of the predetermined path.

The.distribution system 1 according to the present embodiment includes the terminal management system 7 and the distribution control system 2 as separate systems. For example, the terminal management system 7 and the distribution control system 2 may be constructed as an integral system by, for example, causing the distribution control system 2 to have the functions of the terminal management system 7.

The distribution control system 2 and the terminal management system 7 according to the above embodiment may be implemented by a single computer or may be implemented by a plurality of computers in which individual parts (functions, means, or storage units) are divided and assigned in any desirable unit.

Storage media such as CD-ROMs and HDDs in which the programs of the above embodiment are recorded can be provided as program products domestically or abroad.

According to an embodiment, when data is transferred from the first processor to the second processor, data of an area changed is transferred, thereby transferring data between the first processor and the second processor at higher speed than in conventional systems. This can solve a problem in that data transmission from a computer to a communication terminal according to the present invention becomes congested.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

**1.** A computer system comprising:

a first processor (201); and
a second processor (215) configured to perform data communication with the first processor (201) through a predetermined path, wherein
the first processor (201) is configured to transfer updated partial data among a plurality of pieces of partial data constituting frame data to the second processor through the predetermined path,
**characterized in that**
the second processor (215) is configured to perform predetermined processing on frame data obtained after merging the transferred partial data into the frame data, and transfer the resultant data to the first processor, and the first processor (201) is configured to transmit the frame data transferred from the second processor to the outside.

**2.** The computer system according to claim 1, wherein
the first processor (201) is configured to

generate frame data from content data,
store updated partial data among a plurality pieces of partial data constituting the generated frame data in a first memory,
store update state information indicating a state of the first memory updated by the storage of the partial data in a second memory,
read the partial data from the first memory based on the update state information stored in the second memory, and
transfer the read partial data to the second processor (215) through the predetermined path.

**3.** The computer system according to claim 2, wherein
the first memory includes a plurality of meshes that store therein the respective pieces of partial data,
the second memory includes a plurality of certain areas corresponding to the respective meshes, and
the first processor (201) is configured to store the update state information in a certain area corresponding to a mesh in which the partial data is stored among the certain areas.

**4.** The computer system according to any one of claims 1 to 3, wherein the predetermined path is an expansion bus line.

**5.** The computer system according to any one of claims 1 to 4, wherein the first processor (201) is configured to generate the frame data from content data.

**6.** The computer system according to any one of claims 1 to 5, wherein the second processor (215) is configured to perform encoding as the certain processing.

**7.** A distribution control method executed by a distribution control system that includes a first processor (201) and a second processor (215) configured to perform data communication with the first processor through an expansion bus line, the distribution control method comprising:

by the first processor (201),

generating frame data from content data, and
transferring updated partial data among a plurality of pieces of partial data constituting the frame data to the second processor through the predetermined path;

**characterized in that**
the distribution control method further comprises
by the second processor (215),

encoding frame data obtained after merging the transferred partial data into the frame data, and
transferring the encoded frame data to the first processor; and

by the first processor (201), transmitting the frame data transferred from the second processor to the outside.

**8.** A computer-readable storage medium with an executable program stored thereon and executed by a computer, wherein the program instructs the computer to perform the distribution control method according to claim 7.

## Patentansprüche

**1.** Computersystem, das Folgendes umfasst:

einen ersten Prozessor (201) und
einen zweiten Prozessor (215), der dazu ausgelegt ist, mit dem ersten Prozessor (201) über einen vorbestimmten Pfad Datenkommunikation durchzuführen, wobei
der erste Prozessor (201) dazu ausgelegt ist, aktualisierte Teildaten unter einer Vielzahl von Elementen von Teildaten, die Rahmendaten konstituieren, über den vorbestimmten Pfad zum zweiten Prozessor zu übermitteln,
**dadurch gekennzeichnet, dass**
der zweite Prozessor (215) dazu ausgelegt ist, eine vorbestimmte Verarbeitung der Rahmendaten durchzuführen, die erhalten werden, nachdem die übermittelten Teildaten in die Rahmendaten eingemischt wurden, und die resultierenden Daten zum ersten Prozessor zu übermitteln, und
der erste Prozessor (201) dazu ausgelegt ist, die Rahmendaten, die vom zweiten Prozessor übermittelt wurden, nach außen zu übertragen.

**2.** Computersystem nach Anspruch 1, wobei:

der erste Prozessor (201) für Folgendes ausgelegt ist

Erzeugen von Rahmendaten aus Inhaltsdaten,
Speichern von aktualisierten Teildaten unter einer Vielzahl Elementen von Teildaten, die die erzeugten Rahmendaten konstituieren, in einem ersten Speicher,
Speichern von Aktualisierungszustandsinformationen, die einen Zustand des ersten Speichers, der durch die Speicherung der Teildaten aktualisiert wurde, in einem zweiten Speicher anzeigen,
Lesen der Teildaten aus dem ersten Speicher auf Basis der Aktualisierungszustandsinformationen, die im zweiten Speicher gespeichert sind, und
Übermitteln der gelesenen Teildaten über den vorbestimmten Pfad zum zweiten Prozessor (215).

**3.** Computersystem nach Anspruch 2, wobei:

der erste Speicher eine Vielzahl von Netzen beinhaltet, die darin die jeweiligen Elemente der Teildaten speichern,
der zweite Speicher eine Vielzahl von gewissen Bereichen beinhaltet, die den jeweiligen Netzen entsprechen, und
der erste Prozessor (201) dazu ausgelegt ist, die Aktualisierungszustandsinformationen in einem gewissen Bereich unter den gewissen Bereichen zu speichern, der einem Netz entspricht, in dem die Teildaten gespeichert sind.

**4.** Computersystem nach einem der Ansprüche 1 bis 3, wobei der vorbestimmte Pfad eine Erweiterungsbusleitung ist.

**5.** Computersystem nach einem der Ansprüche 1 bis 4, wobei der erste Prozessor (201) dazu ausgelegt ist, die Rahmendaten aus Inhaltsdaten zu erzeugen.

**6.** Computersystem nach einem der Ansprüche 1 bis 5, wobei der zweite Prozessor (215) dazu ausgelegt ist, eine Codierung als die gewisse Verarbeitung durchzuführen.

**7.** Verteilungssteuerverfahren, das von einem Verteilungssteuersystem ausgeführt wird, das einen ersten Prozessor (201) beinhaltet und einen zweiten Prozessor (215), der dazu ausgelegt ist, mit dem ersten Prozessor über eine Erweiterungsbusleitung Datenkommunikation durchzuführen, wobei das Verteilungssteuerverfahren Folgendes umfasst:

durch den ersten Prozessor (201),

Erzeugen von Rahmendaten aus Inhaltsdaten und
Übermitteln aktualisierter Teildaten unter einer Vielzahl von Elementen von Teildaten, die die Rahmendaten konstituieren, über den vorbestimmten Pfad zum zweiten Prozessor;

**dadurch gekennzeichnet, dass**
das Verteilungssteuerverfahren ferner Folgendes umfasst
durch den zweiten Prozessor (215),

Codieren von Rahmendaten, die erhalten werden, nachdem die übermittelten Teildaten in die Rahmendaten eingemischt wurden, und
Übermitteln der codierten Rahmendaten zum ersten Prozessor und

durch den ersten Prozessor (201) Übertragen der Rahmendaten, die vom zweiten Prozessor übermittelt wurden, nach außen,

**8.** Computerlesbares Speichermedium mit einem darauf gespeicherten ausführbaren Programm und ausgeführt von einem Computer, wobei das Programm den Computer anweist, das Verteilungssteuerverfahren nach Anspruch 7 durchzuführen.

## Revendications

**1.** Système informatique comprenant :

un premier processeur (201) ; et
un deuxième processeur (215) conçu pour effectuer une communication de données avec le premier processeur (201) par un trajet prédéterminé, dans lequel
le premier processeur (201) est conçu pour transférer des données partielles actualisées parmi une pluralité d'éléments de données partielles constituant des données de trame au deuxième processeur par le trajet prédéterminé,
**caractérisé en ce que**
le deuxième processeur (215) est conçu pour effectuer un traitement prédéterminé sur des données de trame obtenues après la fusion des données partielles transférées dans les données de trame, et transférer les données obtenues au premier processeur, et
le premier processeur (201) est conçu pour transmettre les données de trame transférées du deuxième processeur à l'extérieur.

**2.** Système informatique selon la revendication 1, dans lequel
le premier processeur (201) est conçu pour
générer des données de trame à partir de données de contenu,
stocker des données partielles actualisées parmi une pluralité d'éléments de données partielles constituant les données de trame générées dans une première mémoire,
stocker des informations d'état d'actualisation indiquant un état de la première mémoire actualisé par le stockage des données partielles dans une deuxième mémoire,
lire les données partielles à partir de la première mémoire en fonction des informations d'état d'actualisation stockées dans la deuxième mémoire, et
transférer les données partielles de lecture au deuxième processeur (215) par le trajet prédéterminé,

3. Système informatique selon la revendication 2, dans lequel
la première mémoire comprend une pluralité de maillages qui stockent à l'intérieur les éléments respectifs de données partielles,
la deuxième mémoire comprend une pluralité de certaines zones correspondant aux maillages respectifs, et
le premier processeur (201) est conçu pour stocker les informations d'état d'actualisation dans une certaine zone correspondant à un maillage dans lequel les données partielles sont stockées parmi lesdites certaines zones.

4. Système informatique selon l'une quelconque des revendications 1 à 3, dans lequel le trajet prédéterminé est une ligne de bus d'extension.

5. Système informatique selon l'une quelconque des revendications 1 à 4, dans lequel le premier processeur (201) est conçu pour générer les données de trame à partir de données de contenu.

6. Système informatique selon l'une quelconque des revendications 1 à 5, dans lequel le deuxième processeur (215) est conçu pour réaliser un codage en tant que ledit certain traitement.

7. Procédé de commande de distribution exécuté par un système de commande de distribution qui comprend un premier processeur (201) et un deuxième processeur (215) conçus pour effectuer une communication de données avec le premier processeur par une ligne de bus d'extension, le procédé de commande de distribution comprenant :

par le premier processeur (201),

la génération de données de trame à partir de données de contenu, et
le transfert de données partielles actualisées parmi une pluralité d'éléments de données partielles constituant les données de trame au deuxième processeur par le trajet prédéterminé ;

**caractérisé en ce que**
le procédé de commande de distribution comprend en outre
par le deuxième processeur (215),

le codage de données de trame obtenues après fusion des données partielles transférées dans les données de trame, et
le transfert des données de trame codées au premier processeur ; et

par le premier processeur (201), la transmission des données de trame transférées du deuxième processeur à l'extérieur.

8. Support de stockage lisible par ordinateur avec un programme exécutable stocké dessus et exécuté par un ordinateur, dans lequel le programme demande à l'ordinateur d'effectuer le procédé de commande de distribution selon la revendication 7.

FIG.1

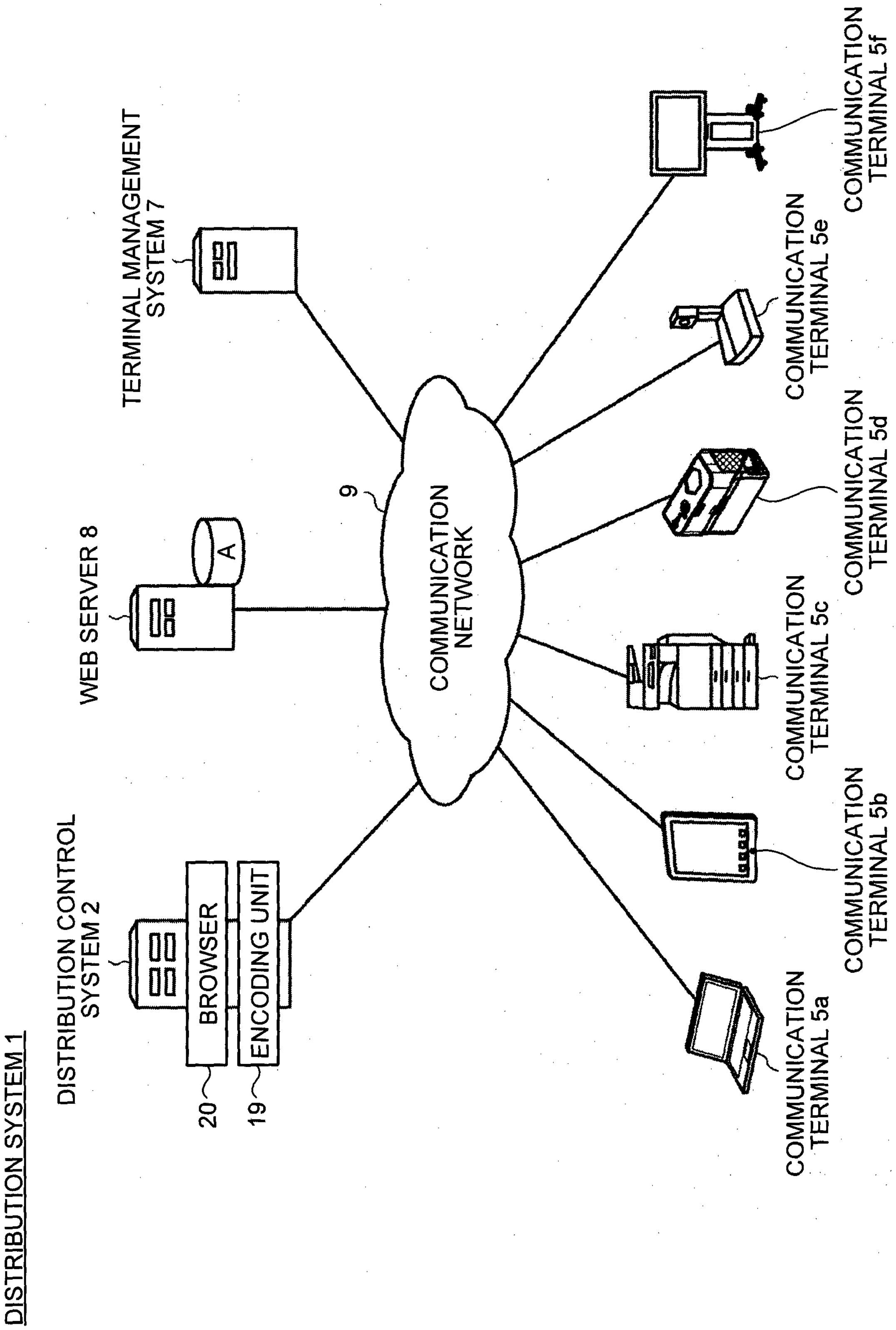
DISTRIBUTION SYSTEM 1
DISTRIBUTION CONTROL SYSTEM 2
BROWSER
ENCODING UNIT
20
19
WEB SERVER 8
A
TERMINAL MANAGEMENT SYSTEM 7
9
COMMUNICATION NETWORK
COMMUNICATION TERMINAL 5a
COMMUNICATION TERMINAL 5b
COMMUNICATION TERMINAL 5c
COMMUNICATION TERMINAL 5d
COMMUNICATION TERMINAL 5e
COMMUNICATION TERMINAL 5f

FIG.2

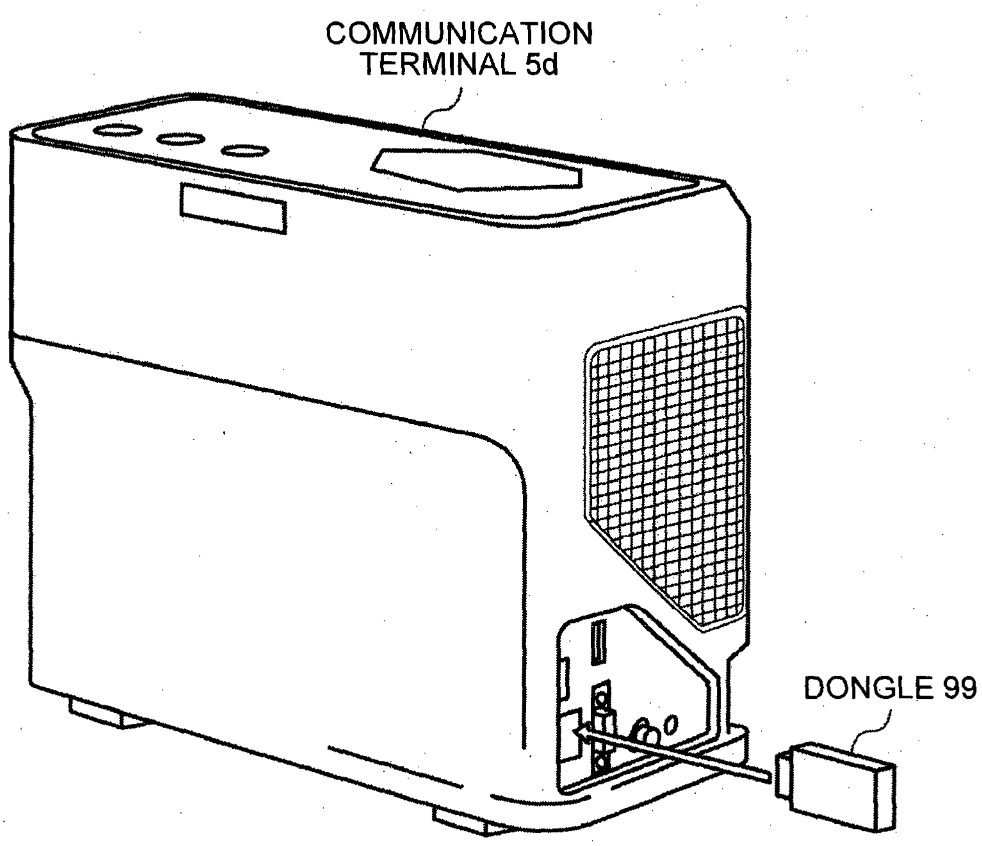

FIG.3

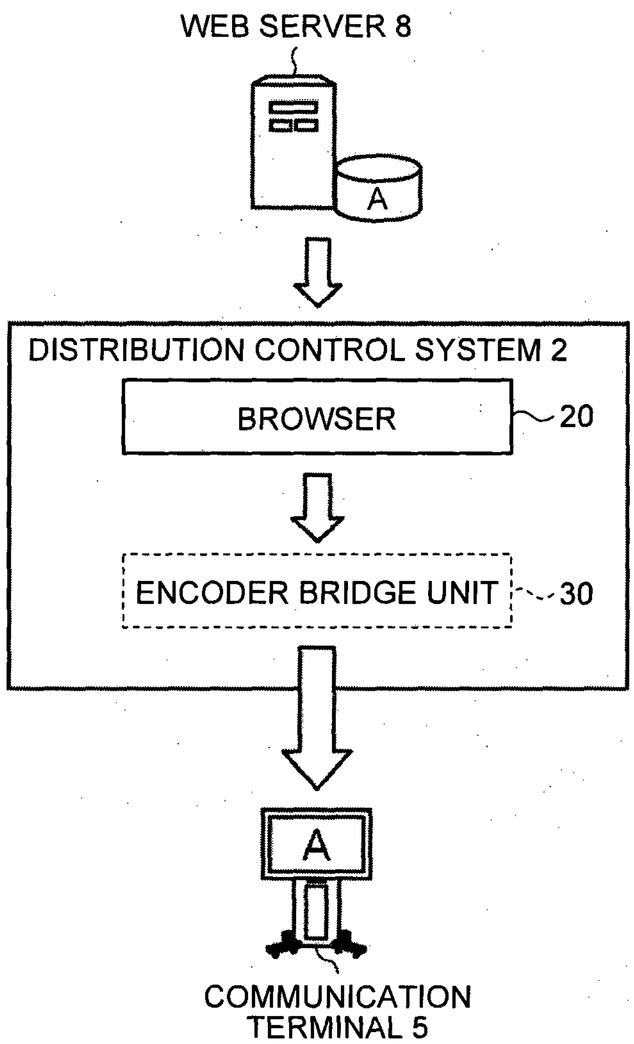
WEB SERVER 8
A
DISTRIBUTION CONTROL SYSTEM 2
BROWSER
20
ENCODER BRIDGE UNIT
30
A
COMMUNICATION
TERMINAL 5

FIG.4

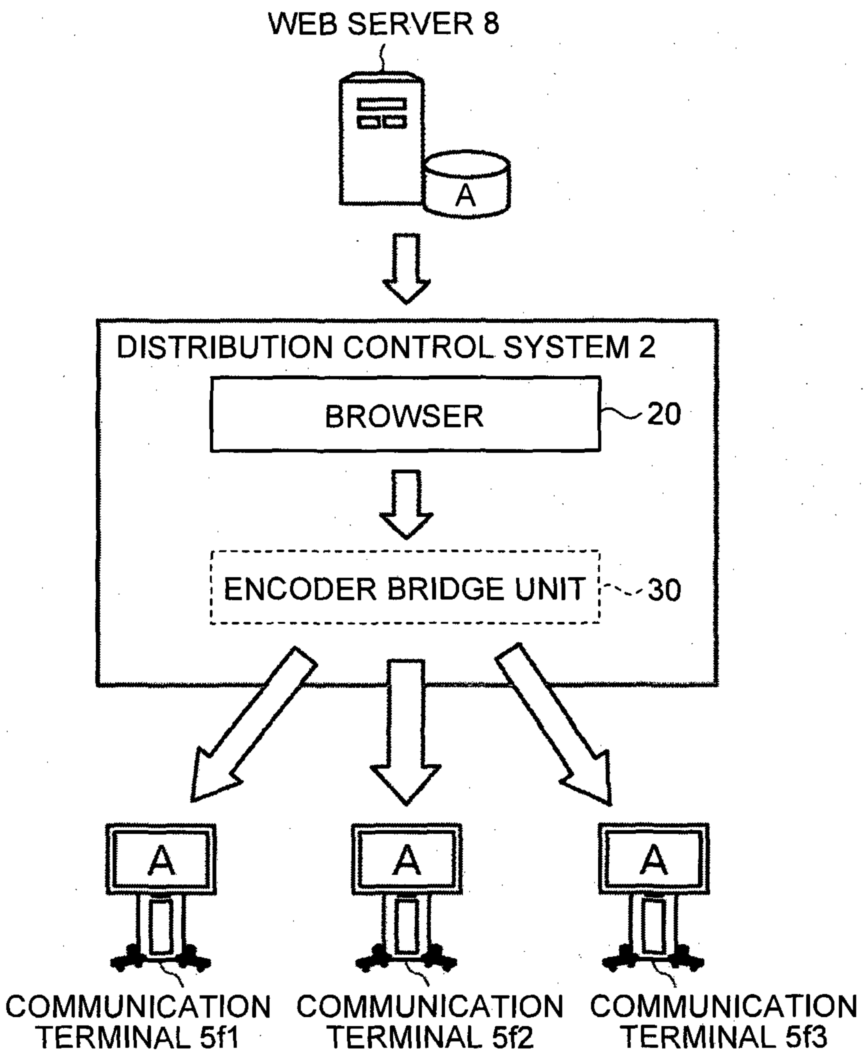
WEB SERVER 8
A
DISTRIBUTION CONTROL SYSTEM 2
BROWSER
20
ENCODER BRIDGE UNIT
30
A
A
A
COMMUNICATION TERMINAL 5f1
COMMUNICATION TERMINAL 5f2
COMMUNICATION TERMINAL 5f3

FIG.5

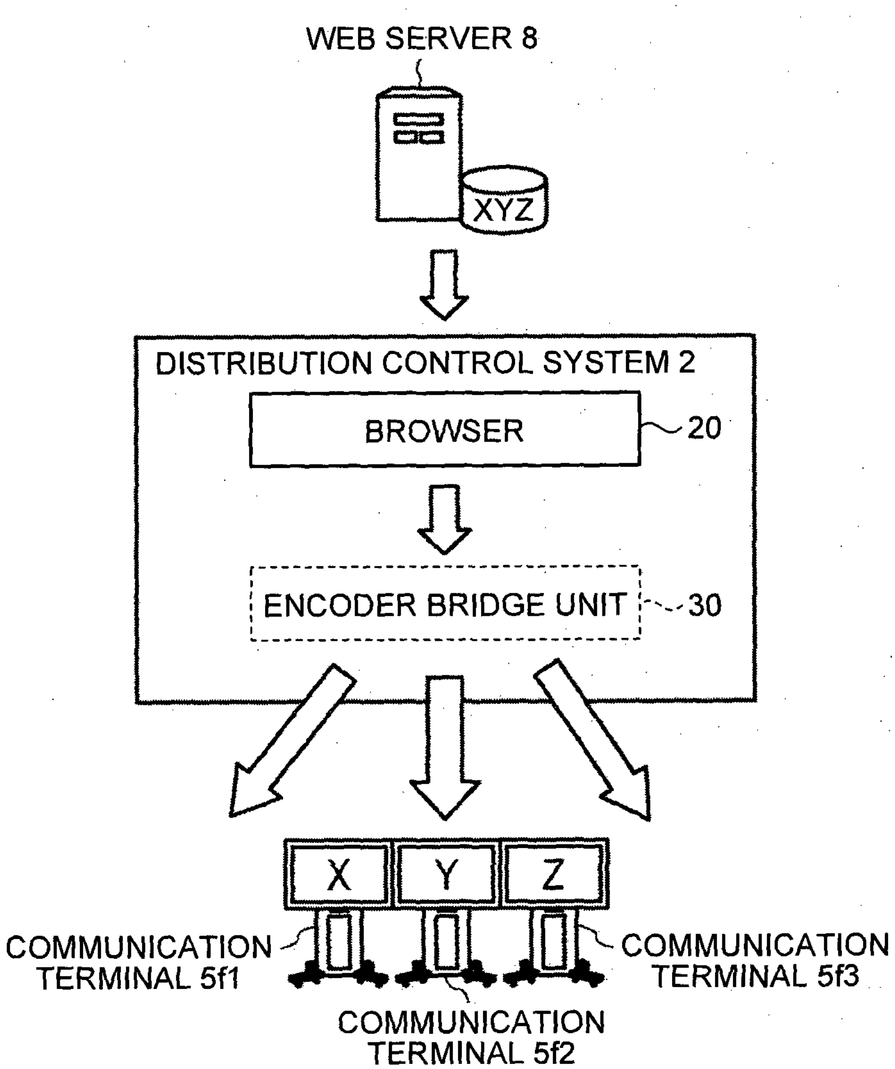
WEB SERVER 8
XYZ
DISTRIBUTION CONTROL SYSTEM 2
BROWSER
20
ENCODER BRIDGE UNIT
30
X
Y
Z
COMMUNICATION TERMINAL 5f1
COMMUNICATION TERMINAL 5f2
COMMUNICATION TERMINAL 5f3

FIG.6

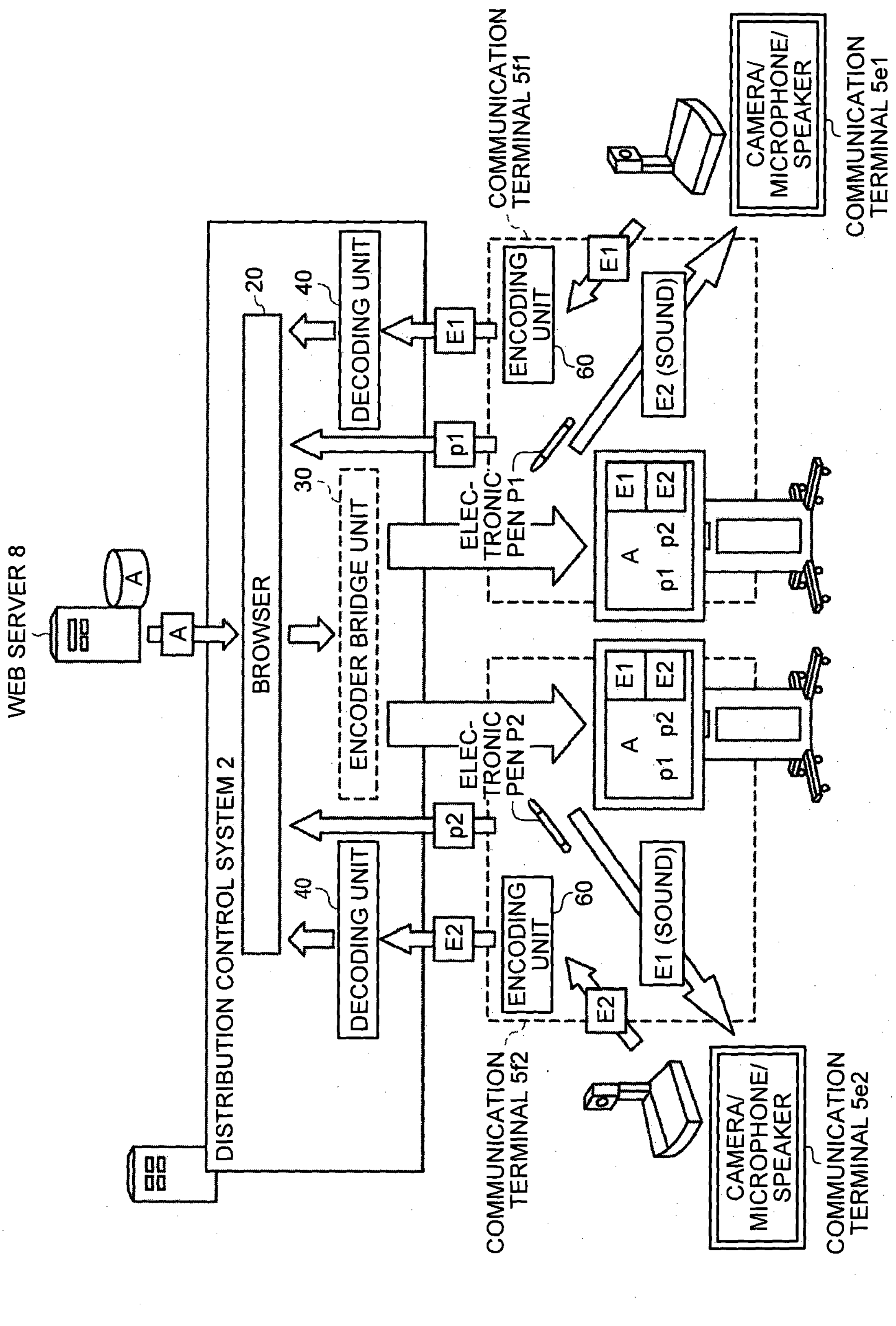
WEB SERVER 8
A
A
DISTRIBUTION CONTROL SYSTEM 2
BROWSER
20
ENCODER BRIDGE UNIT
30
DECODING UNIT
40
DECODING UNIT
40
E1
p1
p2
E2
ELEC-TRONIC PEN P1
ELEC-TRONIC PEN P2
ENCODING UNIT
60
ENCODING UNIT
60
E2 (SOUND)
E1 (SOUND)
A
p1 p2
E1
E2
COMMUNICATION TERMINAL 5f1
COMMUNICATION TERMINAL 5f2
CAMERA/ MICROPHONE/ SPEAKER
COMMUNICATION TERMINAL 5e1
COMMUNICATION TERMINAL 5e2

FIG.7

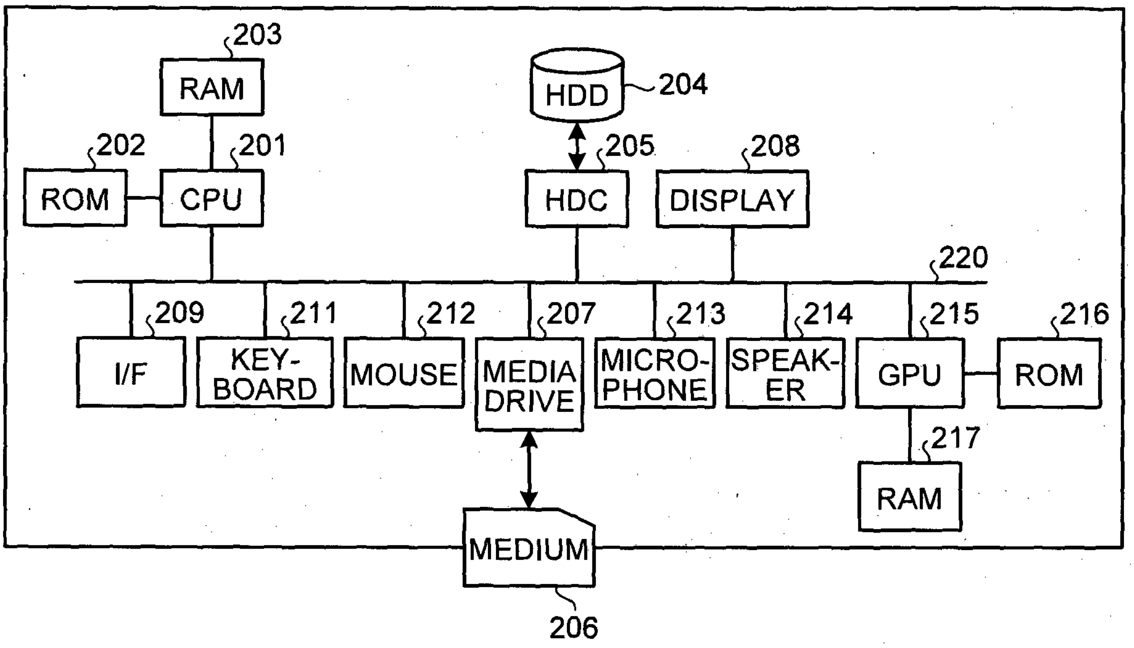
203
RAM
HDD
204
202
201
205
208
ROM
CPU
HDC
DISPLAY
220
209
211
212
207
213
214
215
216
I/F
KEY-
BOARD
MOUSE
MEDIA
DRIVE
MICRO-
PHONE
SPEAK-
ER
GPU
ROM
217
RAM
MEDIUM
206

FIG.8

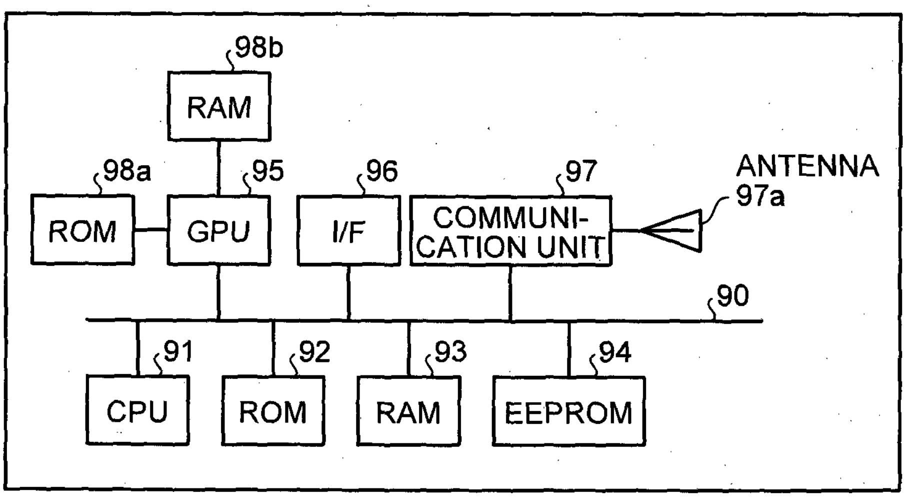
98b
RAM
98a
95
96
97
ANTENNA
97a
ROM
GPU
I/F
COMMUNI-
CATION UNIT
90
91
92
93
94
CPU
ROM
RAM
EEPROM

FIG.9

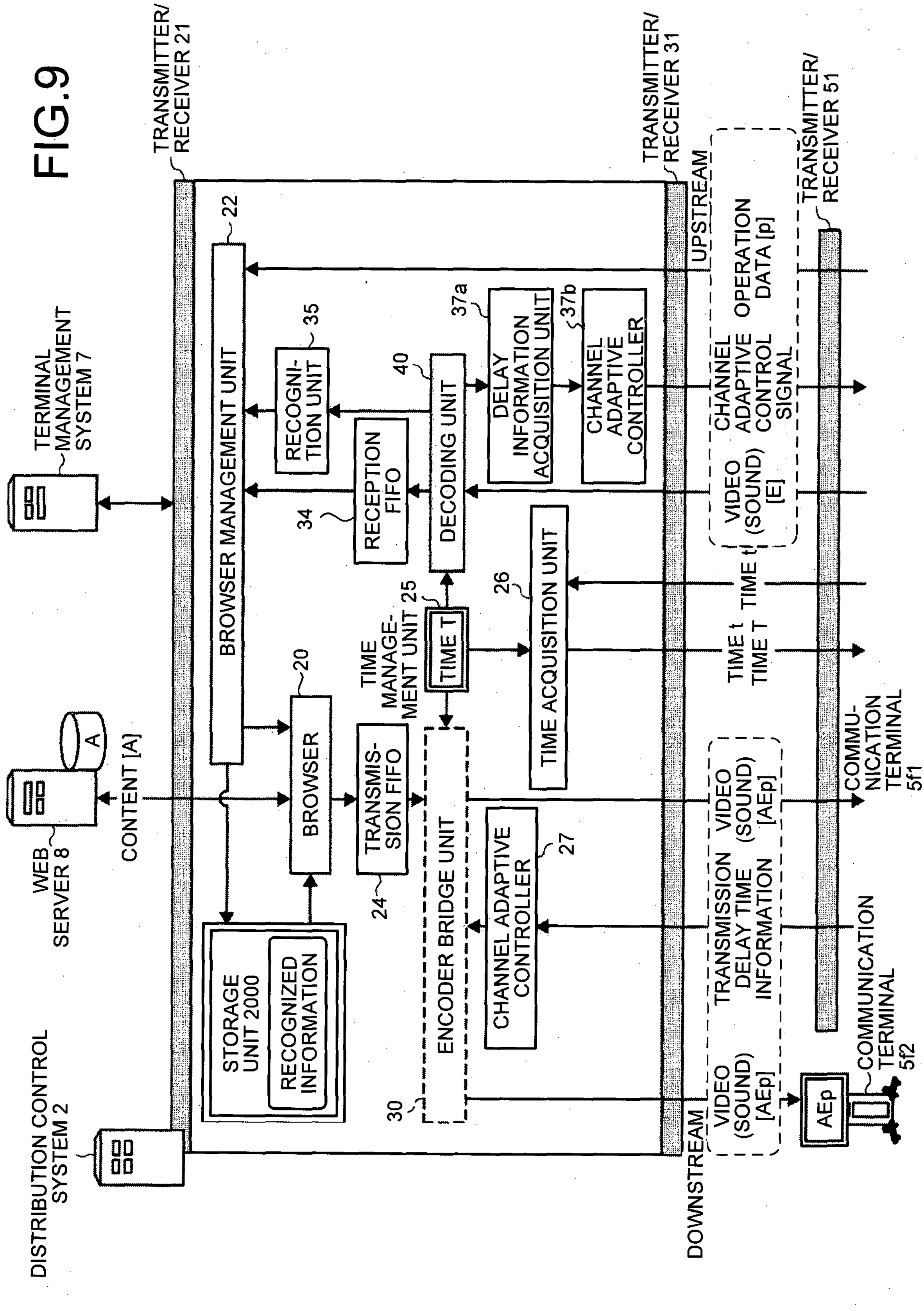
TERMINAL MANAGEMENT SYSTEM 7
WEB SERVER 8
A
CONTENT [A]
DISTRIBUTION CONTROL SYSTEM 2
TRANSMITTER/ RECEIVER 21
BROWSER MANAGEMENT UNIT
22
RECOGNITION UNIT
35
RECEPTION FIFO
34
DECODING UNIT
40
DELAY INFORMATION ACQUISITION UNIT
37a
CHANNEL ADAPTIVE CONTROLLER
37b
BROWSER
20
TRANSMISSION FIFO
24
TIME MANAGEMENT UNIT 25
TIME T
TIME ACQUISITION UNIT
26
STORAGE UNIT 2000
RECOGNIZED INFORMATION
ENCODER BRIDGE UNIT
30
CHANNEL ADAPTIVE CONTROLLER
27
TRANSMITTER/ RECEIVER 31
UPSTREAM
OPERATION DATA [p]
CHANNEL ADAPTIVE CONTROL SIGNAL
VIDEO (SOUND) [E]
TIME t
TIME t
TIME T
VIDEO (SOUND) [AEp]
TRANSMISSION DELAY TIME INFORMATION
VIDEO (SOUND) [AEp]
DOWNSTREAM
TRANSMITTER/ RECEIVER 51
COMMUNICATION TERMINAL 5f1
COMMUNICATION TERMINAL 5f2
AEp

FIG.10

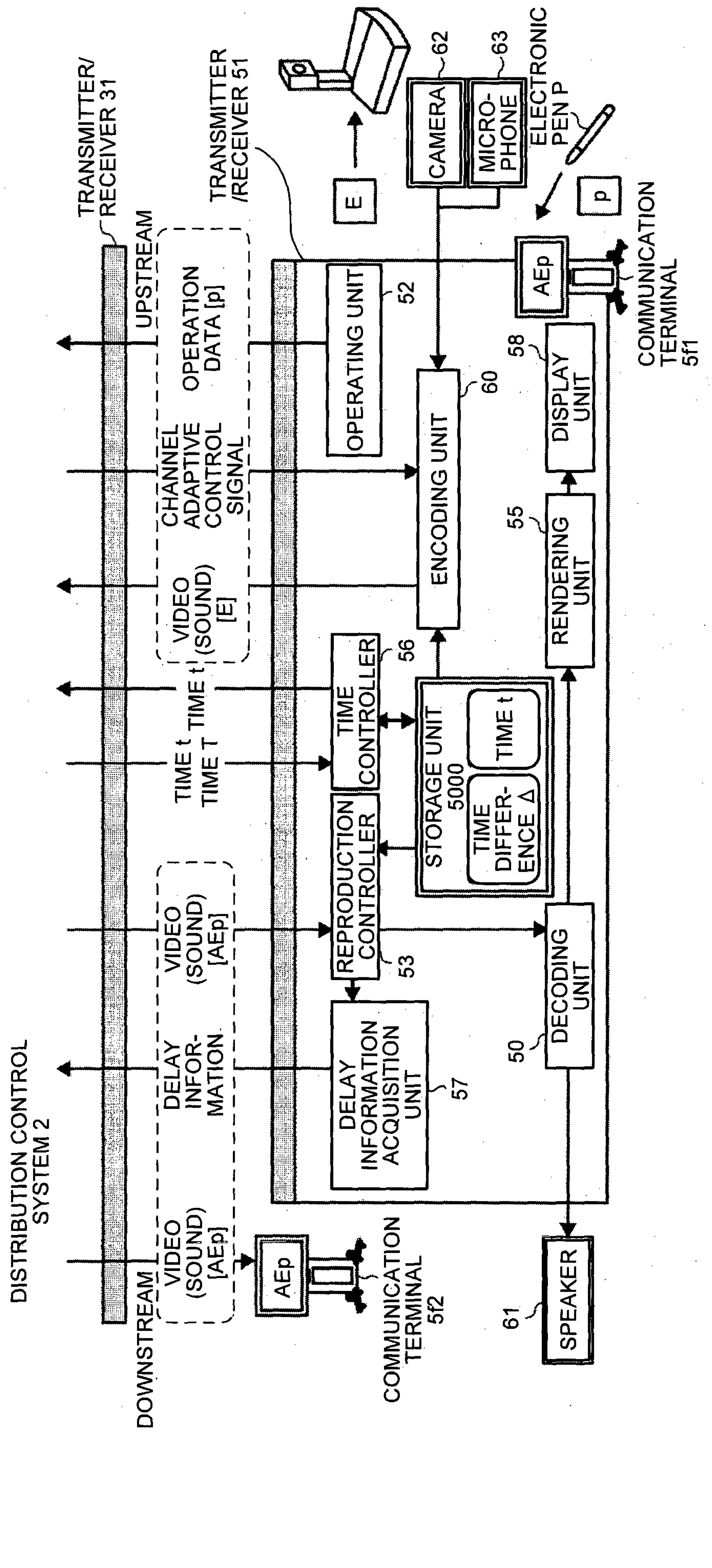
TRANSMITTER/
RECEIVER 31
UPSTREAM
DOWNSTREAM
DISTRIBUTION CONTROL
SYSTEM 2
OPERATION
DATA [p]
CHANNEL
ADAPTIVE
CONTROL
SIGNAL
VIDEO
(SOUND)
[E]
TIME t
TIME T
TIME t
VIDEO
(SOUND)
[AEp]
DELAY
INFOR-
MATION
VIDEO
(SOUND)
[AEp]
AEp
COMMUNICATION
TERMINAL
5f2
TRANSMITTER
/RECEIVER 51
E
CAMERA
62
MICRO-
PHONE
63
ELECTRONIC
PEN P
p
AEp
COMMUNICATION
TERMINAL
5f1
OPERATING UNIT
52
ENCODING UNIT
60
TIME
CONTROLLER
56
STORAGE UNIT
5000
TIME
DIFFER-
ENCE Δ
TIME t
REPRODUCTION
CONTROLLER
53
DELAY
INFORMATION
ACQUISITION
UNIT
57
DISPLAY
UNIT
58
RENDERING
UNIT
55
DECODING
UNIT
50
SPEAKER
61

FIG.11

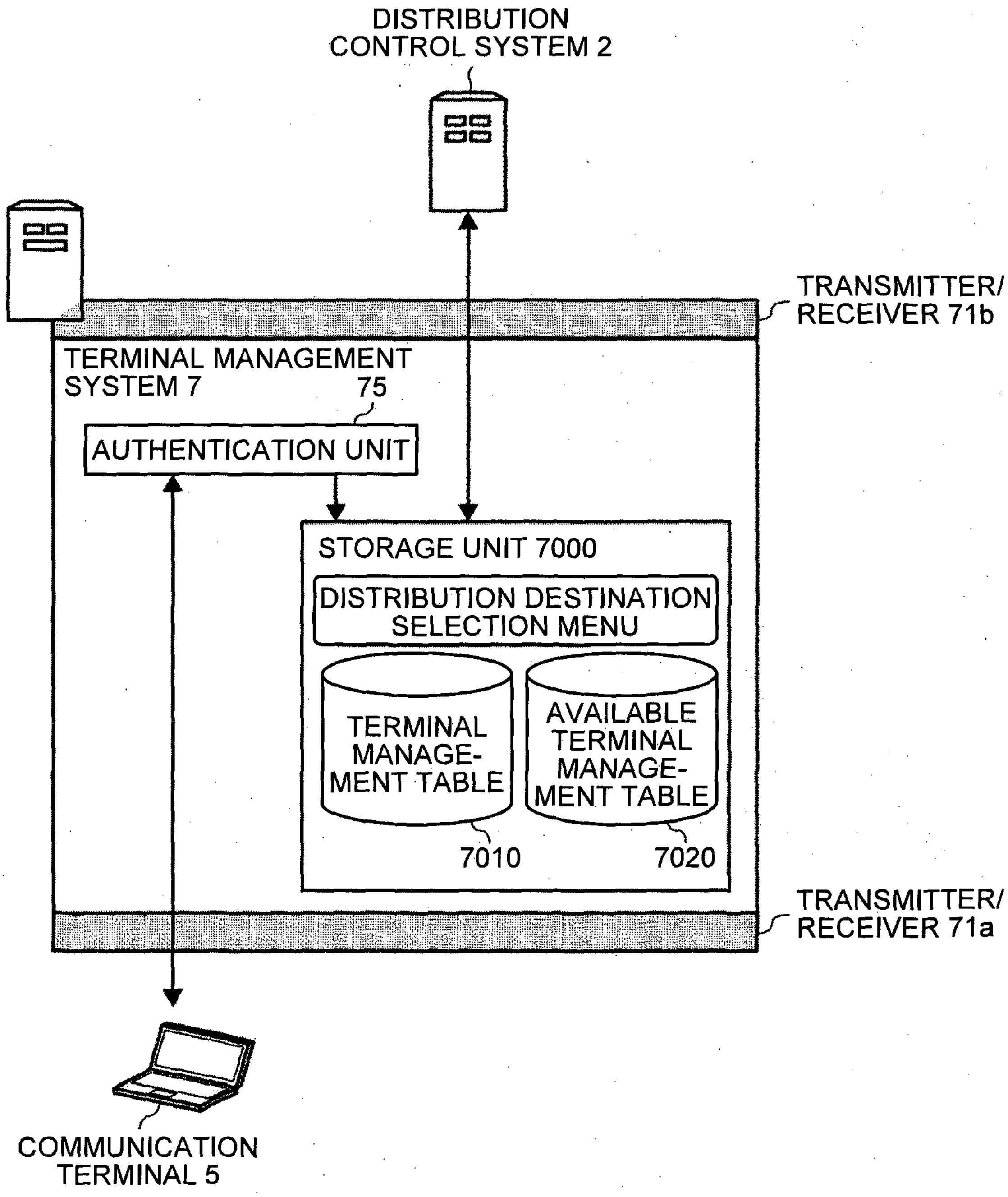
DISTRIBUTION
CONTROL SYSTEM 2
TRANSMITTER/
RECEIVER 71b
TERMINAL MANAGEMENT
SYSTEM 7
75
AUTHENTICATION UNIT
STORAGE UNIT 7000
DISTRIBUTION DESTINATION
SELECTION MENU
TERMINAL
MANAGE-
MENT TABLE
AVAILABLE
TERMINAL
MANAGE-
MENT TABLE
7010
7020
TRANSMITTER/
RECEIVER 71a
COMMUNICATION
TERMINAL 5

FIG.12

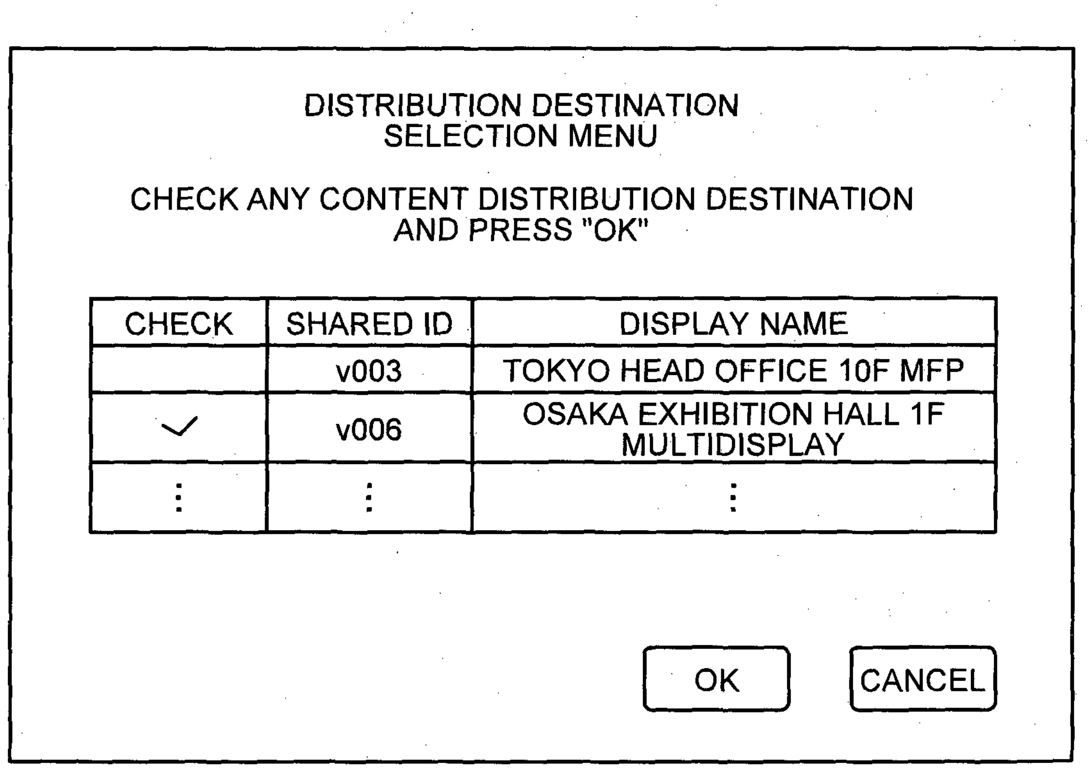
DISTRIBUTION DESTINATION
SELECTION MENU
CHECK ANY CONTENT DISTRIBUTION DESTINATION
AND PRESS "OK"
CHECK
SHARED ID
DISPLAY NAME
v003
TOKYO HEAD OFFICE 10F MFP
v006
OSAKA EXHIBITION HALL 1F
MULTIDISPLAY
OK
CANCEL

FIG.13

| TERMINAL ID | USER CERTIFICATE | CONTRACT INFORMATION | TERMINAL TYPE | SETTING INFORMATION (HOME URL) | EXECUTION ENVIRONMENT INFORMATION (FAVORITES) (PREVIOUS COOKIE INFORMATION) (CACHE FILE) | SHARED ID | INSTALLATION POSITION | DISPLAY NAME |
|---|---|---|---|---|---|---|---|---|
| t001 | ...... | FHD, 30FPS, 3-MONTH CONTRACT | NOTEBOOK PC | http:// www.rocoh.co.jp | ...... | v001 | - | BEIJING OFFICE 10F TERMINAL |
| t002 | ...... | HD, 30FPS, 3-MONTH CONTRACT | TABLET TERMINAL | http:// www.rocoh.co.jp | ...... | v002 | - | NEW YORK OFFICE 1F LOBBY RECEPTION TERMINAL |
| t003 | ...... | QVGA, 15FPS, 6 MONTHS | MFP | http:// www.rocoh.co.jp | ...... | v003 | - | TOKYO HEAD OFFICE 10F MFP |
| t004 | ...... | WXGA, 15FPS, 12 MONTHS | PROJECTOR | http:// www.pontax.co.jp | ...... | v004 | - | TOKYO HEAD OFFICE 1F LOBBY PROJECTOR |
| t005 | ...... | WXGA, 15FPS, 6 MONTHS | CAMERA/ MICROPHONE/ SPEAKER | - | - | v005 | - | NAGOYA BRANCH OFFICE 2F TV CONFERENCE ROOM TERMIAL |
| t006 | ...... | FHD, 30FPS, 12-MONTH CONTRACT | MULTIDISPLAY | - | - | v006 | LEFT | OSAKA EXHIBITION HALL 1F MULTI-DISPLAY |
| t007 | ...... | FHD, 30FPS, 12-MONTH CONTRACT | MULTIDISPLAY | - | - | v006 | MIDDLE | OSAKA EXHIBITION HALL 1F MULTI-DISPLAY |
| t008 | ...... | FHD, 30FPS, 12-MONTH CONTRACT | MULTIDISPLAY | - | - | v006 | RIGHT | OSAKA EXHIBITION HALL 1F MULTI-DISPLAY |
| ⋮ | ⋮ | ⋮ | ⋮ | ⋮ | ⋮ | ⋮ | ⋮ | ⋮ |

FIG.14

| TERMINAL ID | SHARED ID |
|---|---|
| t001 | v003 |
| t001 | v006 |
| t002 | v001 |
| ⋮ | ⋮ |

FIG.15

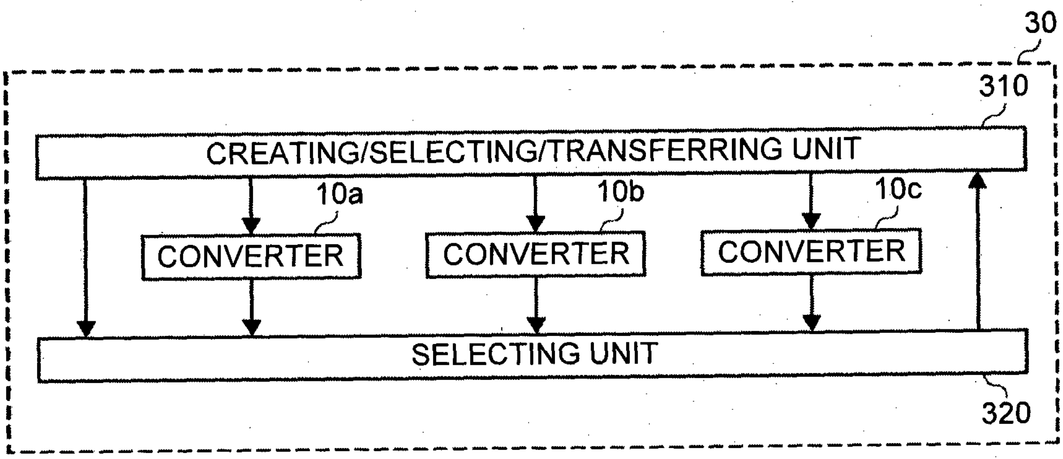


FIG.16

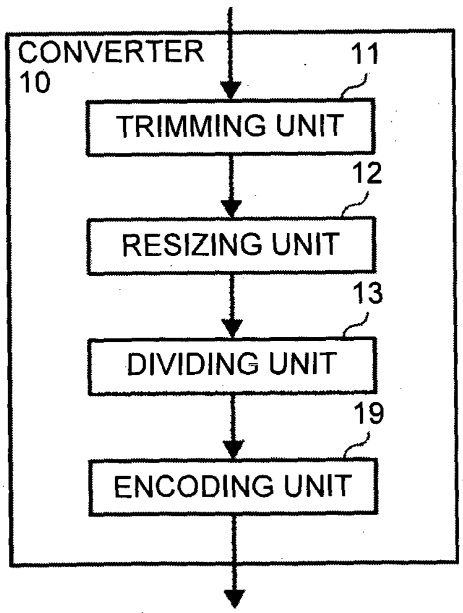

FIG.17

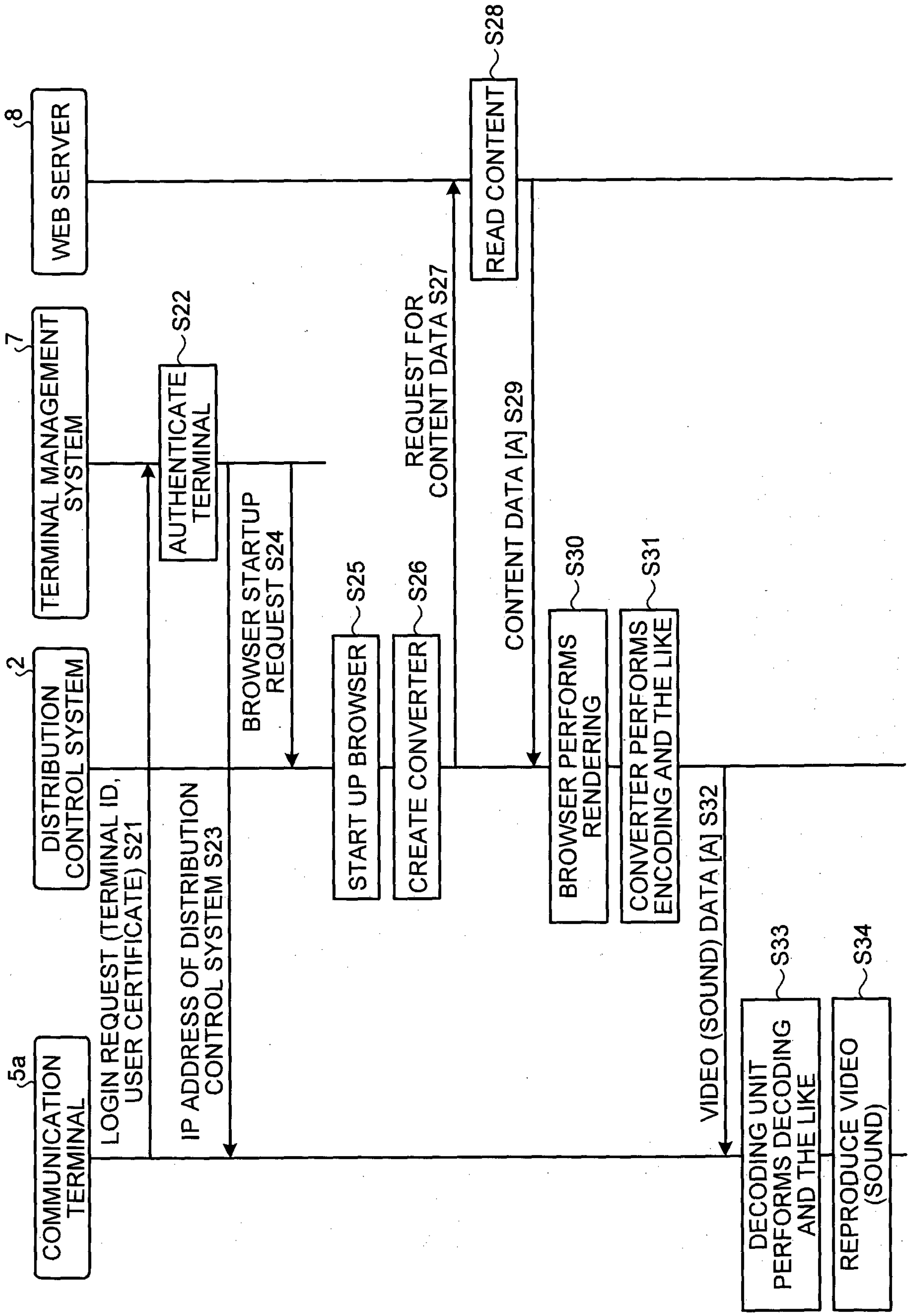
5a
COMMUNICATION TERMINAL
2
DISTRIBUTION CONTROL SYSTEM
7
TERMINAL MANAGEMENT SYSTEM
8
WEB SERVER
LOGIN REQUEST (TERMINAL ID, USER CERTIFICATE) S21
AUTHENTICATE TERMINAL
S22
IP ADDRESS OF DISTRIBUTION CONTROL SYSTEM S23
BROWSER STARTUP REQUEST S24
START UP BROWSER
S25
CREATE CONVERTER
S26
REQUEST FOR CONTENT DATA S27
READ CONTENT
S28
CONTENT DATA [A] S29
BROWSER PERFORMS RENDERING
S30
CONVERTER PERFORMS ENCODING AND THE LIKE
S31
VIDEO (SOUND) DATA [A] S32
DECODING UNIT PERFORMS DECODING AND THE LIKE
S33
REPRODUCE VIDEO (SOUND)
S34

FIG.18

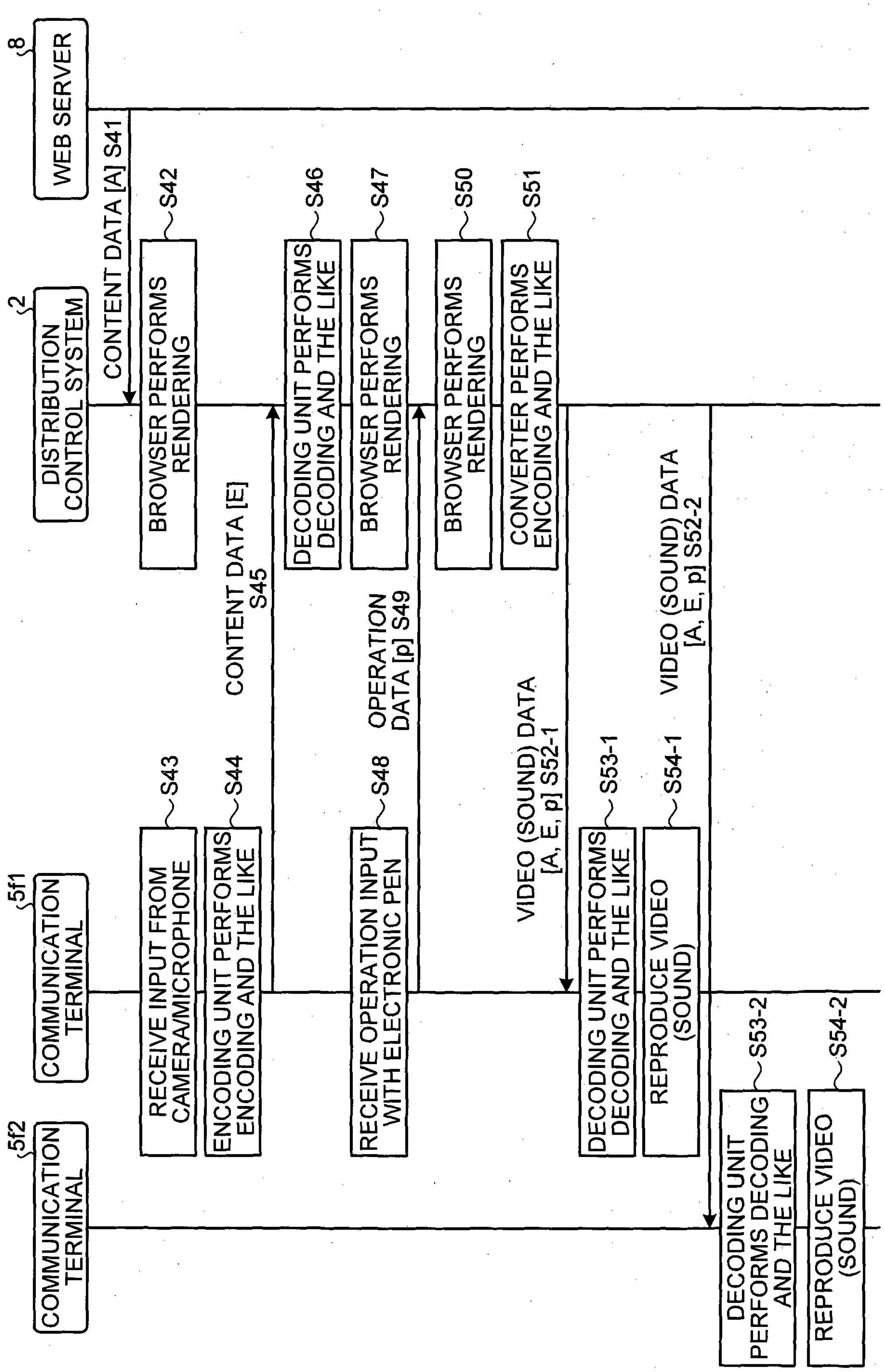
WEB SERVER
8
DISTRIBUTION CONTROL SYSTEM
2
COMMUNICATION TERMINAL
5f1
COMMUNICATION TERMINAL
5f2
CONTENT DATA [A] S41
BROWSER PERFORMS RENDERING
S42
RECEIVE INPUT FROM CAMERA/MICROPHONE
S43
ENCODING UNIT PERFORMS ENCODING AND THE LIKE
S44
CONTENT DATA [E] S45
DECODING UNIT PERFORMS DECODING AND THE LIKE
S46
BROWSER PERFORMS RENDERING
S47
RECEIVE OPERATION INPUT WITH ELECTRONIC PEN
S48
OPERATION DATA [p] S49
BROWSER PERFORMS RENDERING
S50
CONVERTER PERFORMS ENCODING AND THE LIKE
S51
VIDEO (SOUND) DATA [A, E, p] S52-1
DECODING UNIT PERFORMS DECODING AND THE LIKE
S53-1
REPRODUCE VIDEO (SOUND)
S54-1
VIDEO (SOUND) DATA [A, E, p] S52-2
DECODING UNIT PERFORMS DECODING AND THE LIKE
S53-2
REPRODUCE VIDEO (SOUND)
S54-2

FIG.19

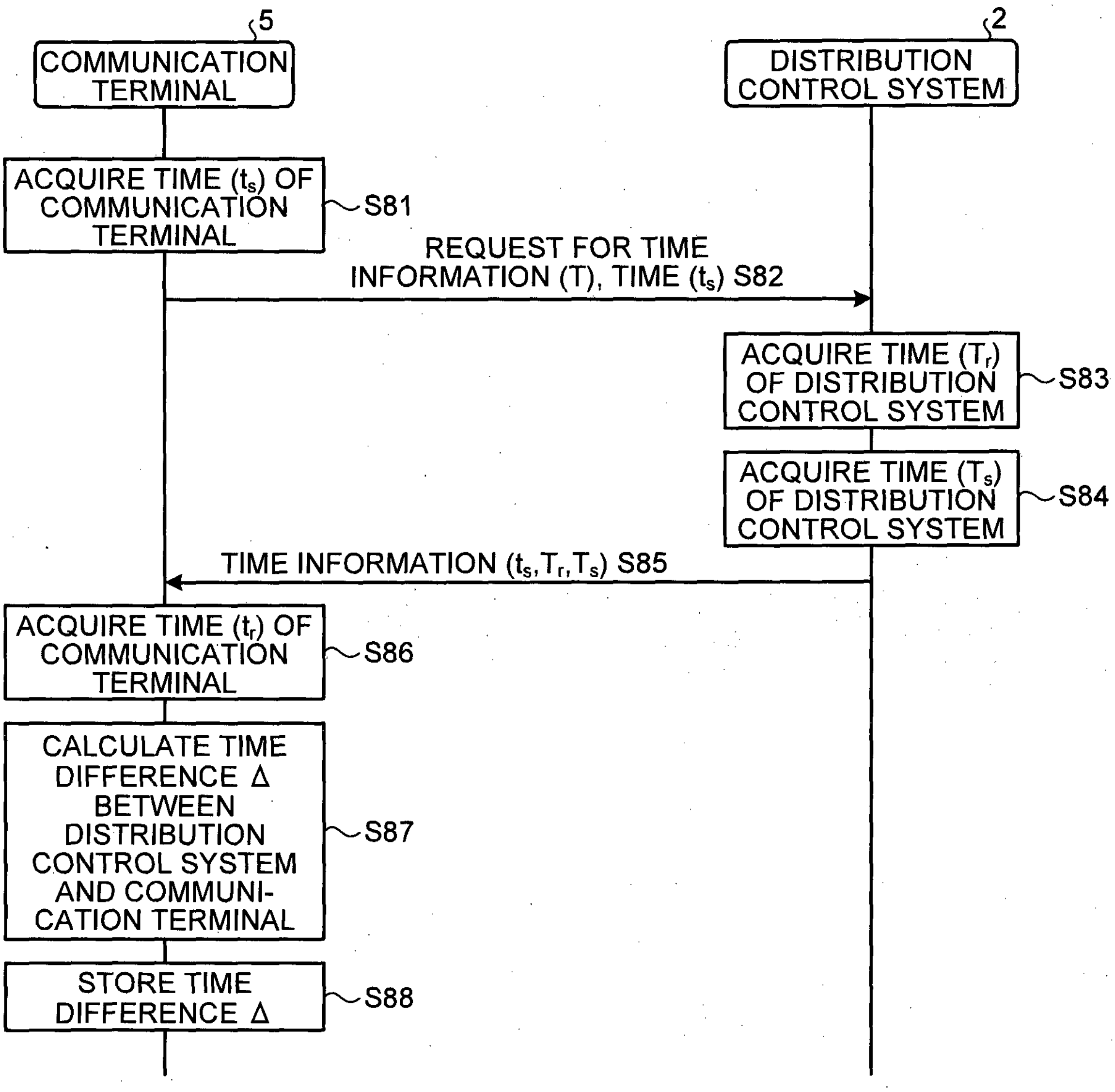
5
COMMUNICATION TERMINAL
2
DISTRIBUTION CONTROL SYSTEM
ACQUIRE TIME ($t_s$) OF COMMUNICATION TERMINAL
S81
REQUEST FOR TIME INFORMATION (T), TIME ($t_s$) S82
ACQUIRE TIME ($T_r$) OF DISTRIBUTION CONTROL SYSTEM
S83
ACQUIRE TIME ($T_s$) OF DISTRIBUTION CONTROL SYSTEM
S84
TIME INFORMATION ($t_s$,$T_r$,$T_s$) S85
ACQUIRE TIME ($t_r$) OF COMMUNICATION TERMINAL
S86
CALCULATE TIME DIFFERENCE Δ BETWEEN DISTRIBUTION CONTROL SYSTEM AND COMMUNI-CATION TERMINAL
S87
STORE TIME DIFFERENCE Δ
S88

FIG.20

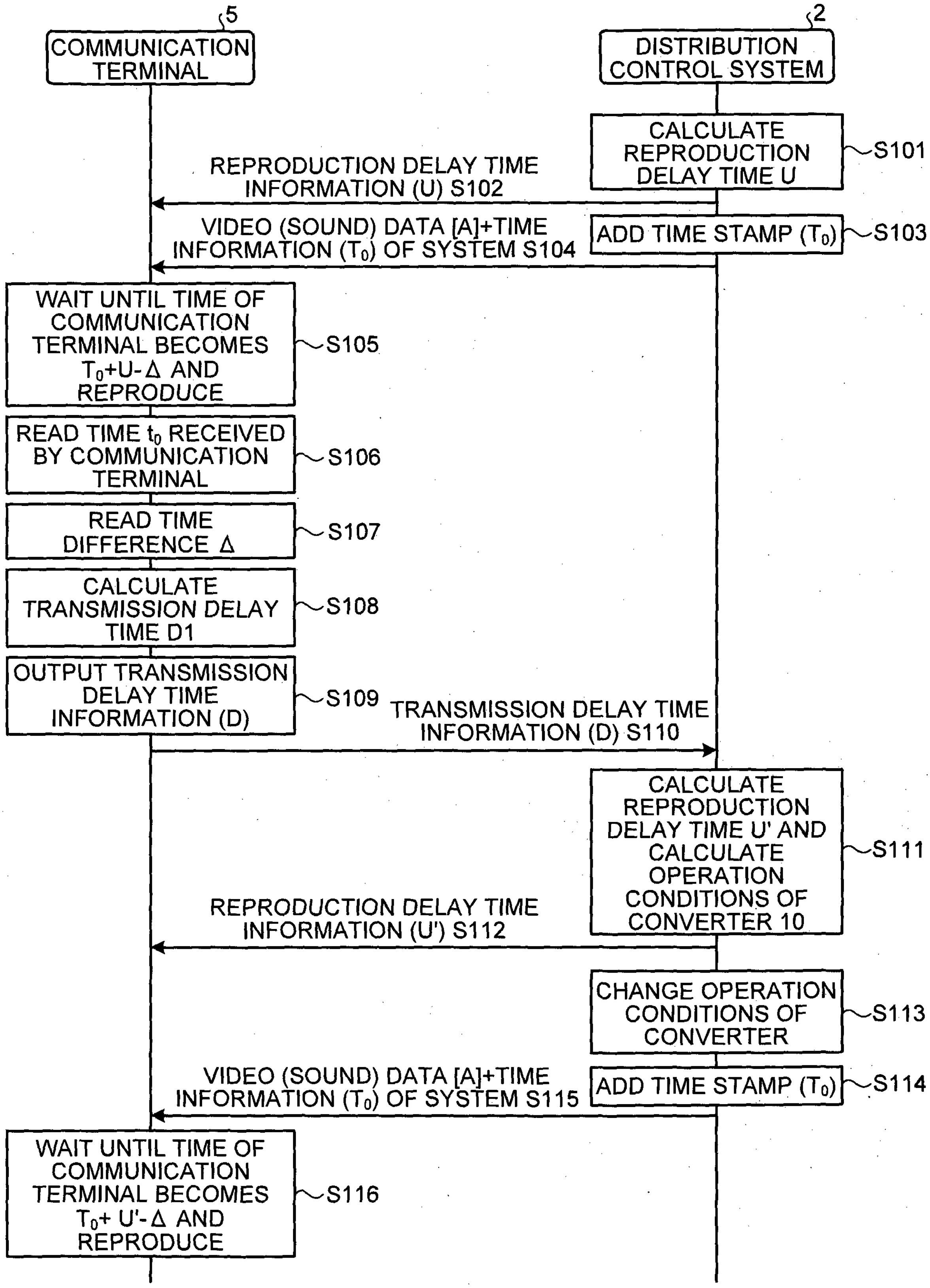
5
COMMUNICATION TERMINAL
2
DISTRIBUTION CONTROL SYSTEM
CALCULATE REPRODUCTION DELAY TIME U
S101
REPRODUCTION DELAY TIME INFORMATION (U) S102
ADD TIME STAMP (T0)
S103
VIDEO (SOUND) DATA [A]+TIME INFORMATION (T0) OF SYSTEM S104
WAIT UNTIL TIME OF COMMUNICATION TERMINAL BECOMES T0+U-Δ AND REPRODUCE
S105
READ TIME t0 RECEIVED BY COMMUNICATION TERMINAL
S106
READ TIME DIFFERENCE Δ
S107
CALCULATE TRANSMISSION DELAY TIME D1
S108
OUTPUT TRANSMISSION DELAY TIME INFORMATION (D)
S109
TRANSMISSION DELAY TIME INFORMATION (D) S110
CALCULATE REPRODUCTION DELAY TIME U' AND CALCULATE OPERATION CONDITIONS OF CONVERTER 10
S111
REPRODUCTION DELAY TIME INFORMATION (U') S112
CHANGE OPERATION CONDITIONS OF CONVERTER
S113
ADD TIME STAMP (T0)
S114
VIDEO (SOUND) DATA [A]+TIME INFORMATION (T0) OF SYSTEM S115
WAIT UNTIL TIME OF COMMUNICATION TERMINAL BECOMES T0+ U'-Δ AND REPRODUCE
S116

FIG.21

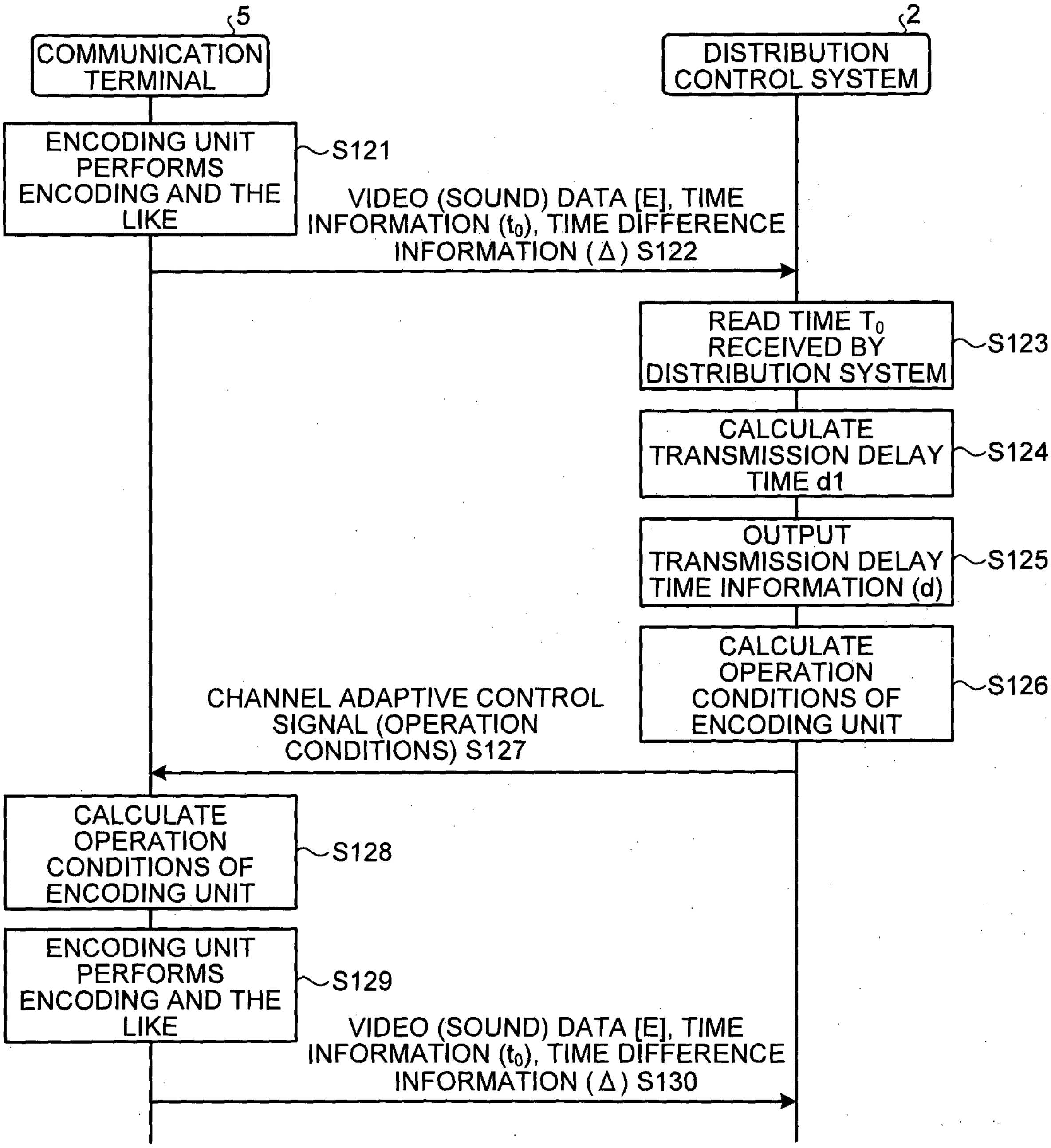
5
COMMUNICATION TERMINAL
2
DISTRIBUTION CONTROL SYSTEM
ENCODING UNIT PERFORMS ENCODING AND THE LIKE
S121
VIDEO (SOUND) DATA [E], TIME INFORMATION ($t_0$), TIME DIFFERENCE INFORMATION (Δ) S122
READ TIME $T_0$ RECEIVED BY DISTRIBUTION SYSTEM
S123
CALCULATE TRANSMISSION DELAY TIME d1
S124
OUTPUT TRANSMISSION DELAY TIME INFORMATION (d)
S125
CALCULATE OPERATION CONDITIONS OF ENCODING UNIT
S126
CHANNEL ADAPTIVE CONTROL SIGNAL (OPERATION CONDITIONS) S127
CALCULATE OPERATION CONDITIONS OF ENCODING UNIT
S128
ENCODING UNIT PERFORMS ENCODING AND THE LIKE
S129
VIDEO (SOUND) DATA [E], TIME INFORMATION ($t_0$), TIME DIFFERENCE INFORMATION (Δ) S130

FIG.22

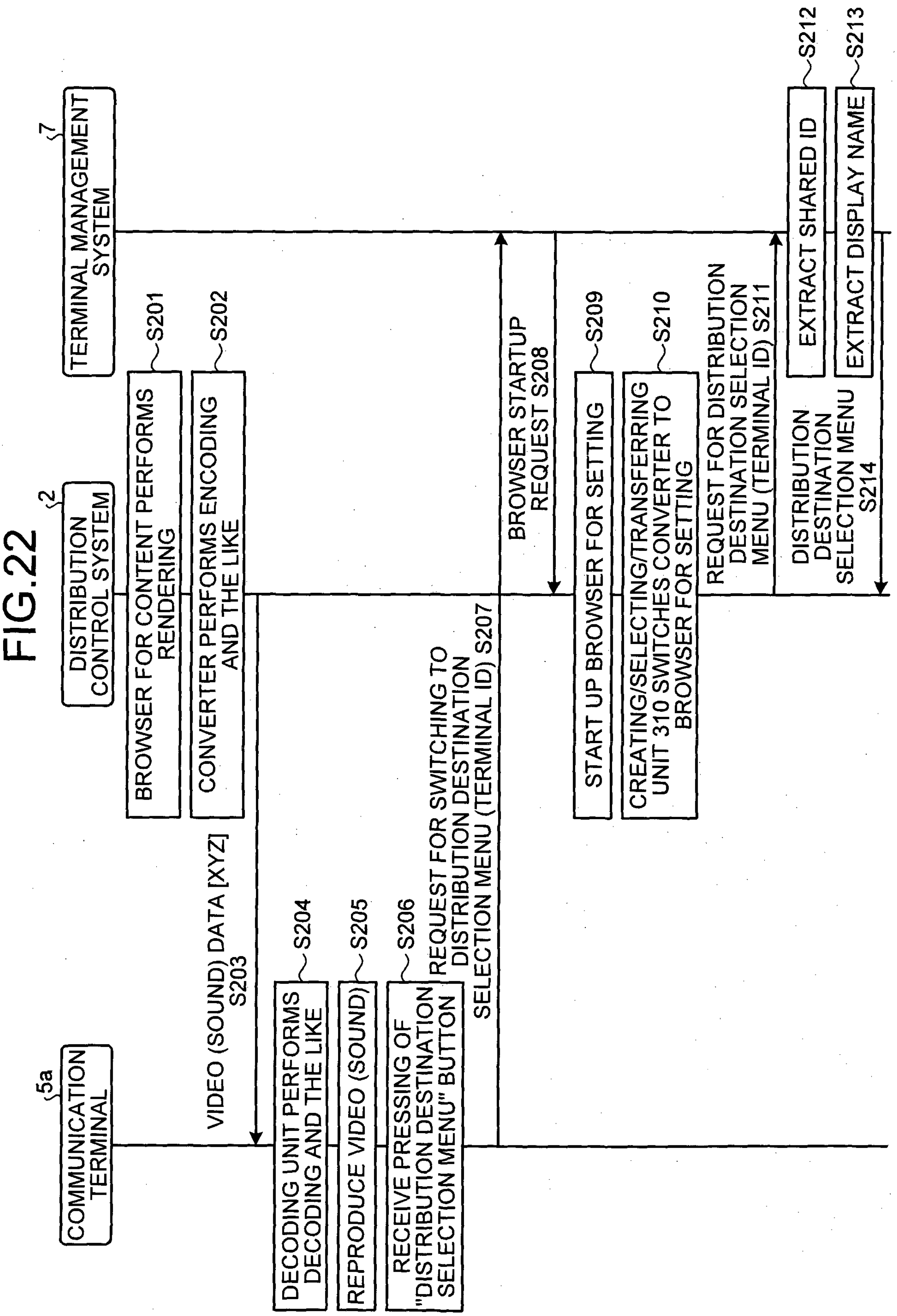
COMMUNICATION TERMINAL
5a
DISTRIBUTION CONTROL SYSTEM
2
TERMINAL MANAGEMENT SYSTEM
7
BROWSER FOR CONTENT PERFORMS RENDERING
S201
CONVERTER PERFORMS ENCODING AND THE LIKE
S202
VIDEO (SOUND) DATA [XYZ] S203
DECODING UNIT PERFORMS DECODING AND THE LIKE
S204
REPRODUCE VIDEO (SOUND)
S205
RECEIVE PRESSING OF "DISTRIBUTION DESTINATION SELECTION MENU" BUTTON
S206
REQUEST FOR SWITCHING TO DISTRIBUTION DESTINATION SELECTION MENU (TERMINAL ID) S207
BROWSER STARTUP REQUEST S208
START UP BROWSER FOR SETTING
S209
CREATING/SELECTING/TRANSFERRING UNIT 310 SWITCHES CONVERTER TO BROWSER FOR SETTING
S210
REQUEST FOR DISTRIBUTION DESTINATION SELECTION MENU (TERMINAL ID) S211
EXTRACT SHARED ID
S212
EXTRACT DISPLAY NAME
S213
DISTRIBUTION DESTINATION SELECTION MENU S214

FIG.23

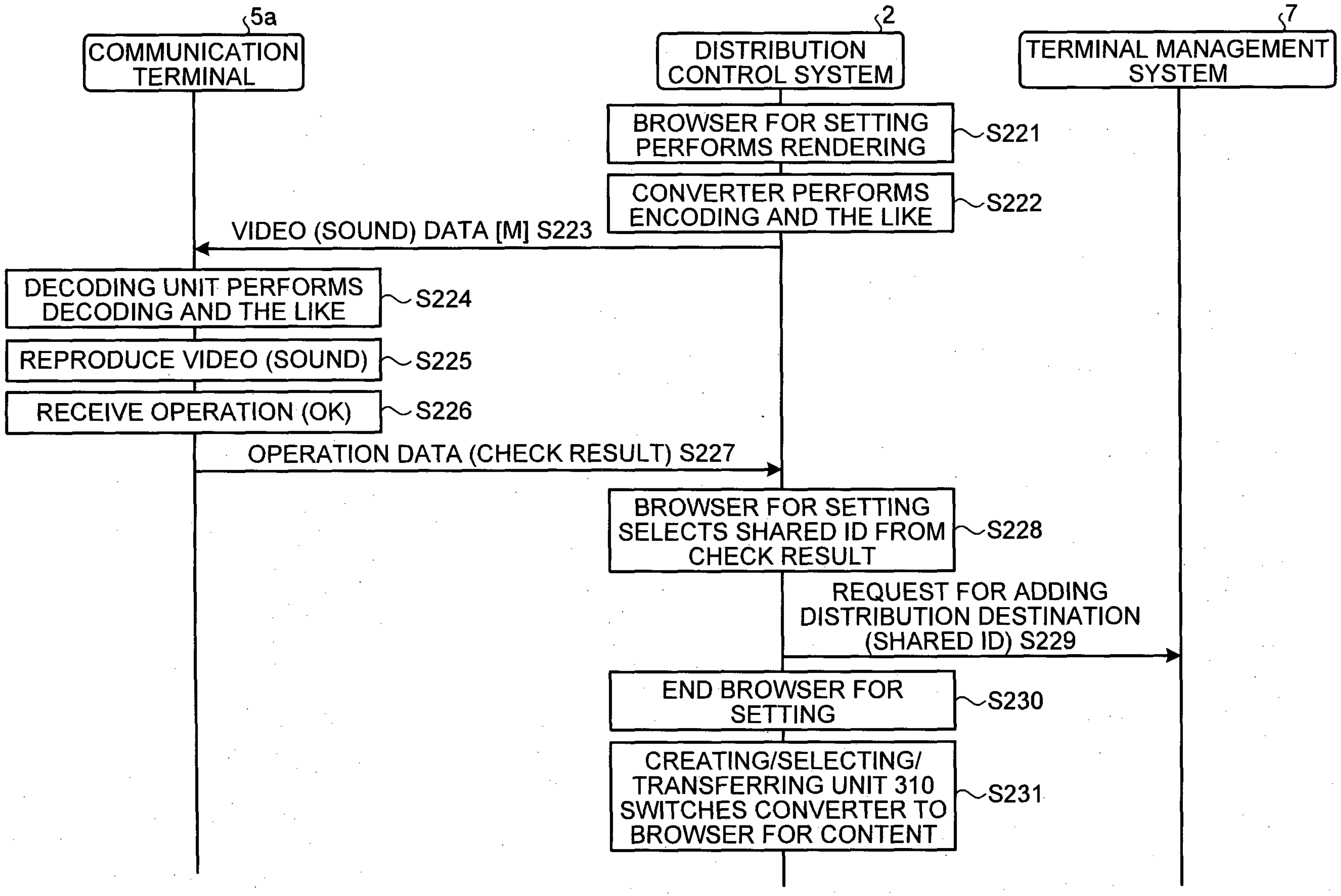
5a
COMMUNICATION TERMINAL
2
DISTRIBUTION CONTROL SYSTEM
7
TERMINAL MANAGEMENT SYSTEM
BROWSER FOR SETTING PERFORMS RENDERING
S221
CONVERTER PERFORMS ENCODING AND THE LIKE
S222
VIDEO (SOUND) DATA [M] S223
DECODING UNIT PERFORMS DECODING AND THE LIKE
S224
REPRODUCE VIDEO (SOUND)
S225
RECEIVE OPERATION (OK)
S226
OPERATION DATA (CHECK RESULT) S227
BROWSER FOR SETTING SELECTS SHARED ID FROM CHECK RESULT
S228
REQUEST FOR ADDING DISTRIBUTION DESTINATION (SHARED ID) S229
END BROWSER FOR SETTING
S230
CREATING/SELECTING/ TRANSFERRING UNIT 310 SWITCHES CONVERTER TO BROWSER FOR CONTENT
S231

FIG.24

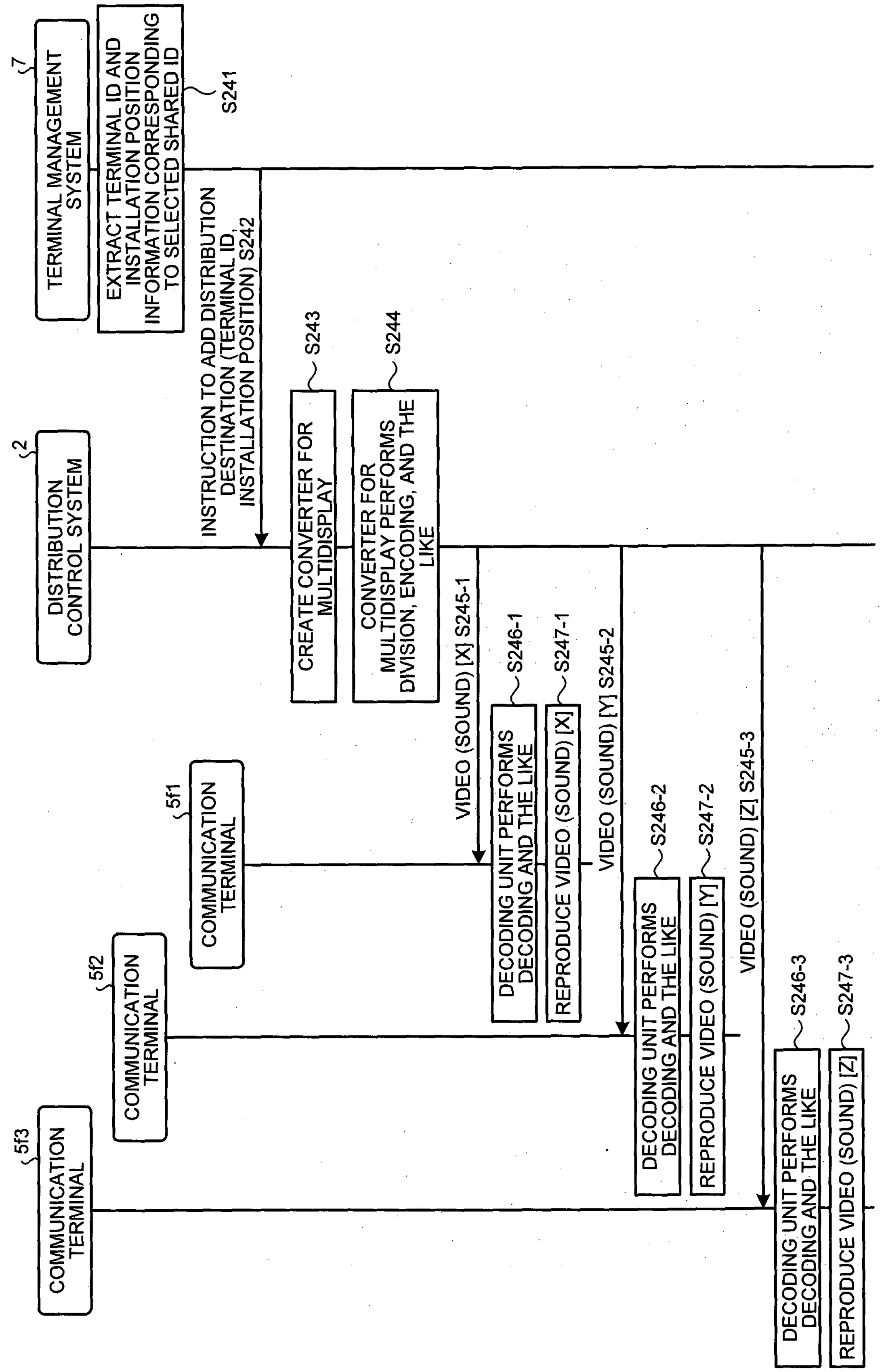

TERMINAL MANAGEMENT SYSTEM
7
DISTRIBUTION CONTROL SYSTEM
2
COMMUNICATION TERMINAL
5f1
COMMUNICATION TERMINAL
5f2
COMMUNICATION TERMINAL
5f3
EXTRACT TERMINAL ID AND INSTALLATION POSITION INFORMATION CORRESPONDING TO SELECTED SHARED ID
S241
INSTRUCTION TO ADD DISTRIBUTION DESTINATION (TERMINAL ID, INSTALLATION POSITION) S242
CREATE CONVERTER FOR MULTIDISPLAY
S243
CONVERTER FOR MULTIDISPLAY PERFORMS DIVISION, ENCODING, AND THE LIKE
S244
VIDEO (SOUND) [X] S245-1
DECODING UNIT PERFORMS DECODING AND THE LIKE
S246-1
REPRODUCE VIDEO (SOUND) [X]
S247-1
VIDEO (SOUND) [Y] S245-2
DECODING UNIT PERFORMS DECODING AND THE LIKE
S246-2
REPRODUCE VIDEO (SOUND) [Y]
S247-2
VIDEO (SOUND) [Z] S245-3
DECODING UNIT PERFORMS DECODING AND THE LIKE
S246-3
REPRODUCE VIDEO (SOUND) [Z]
S247-3

FIG.25

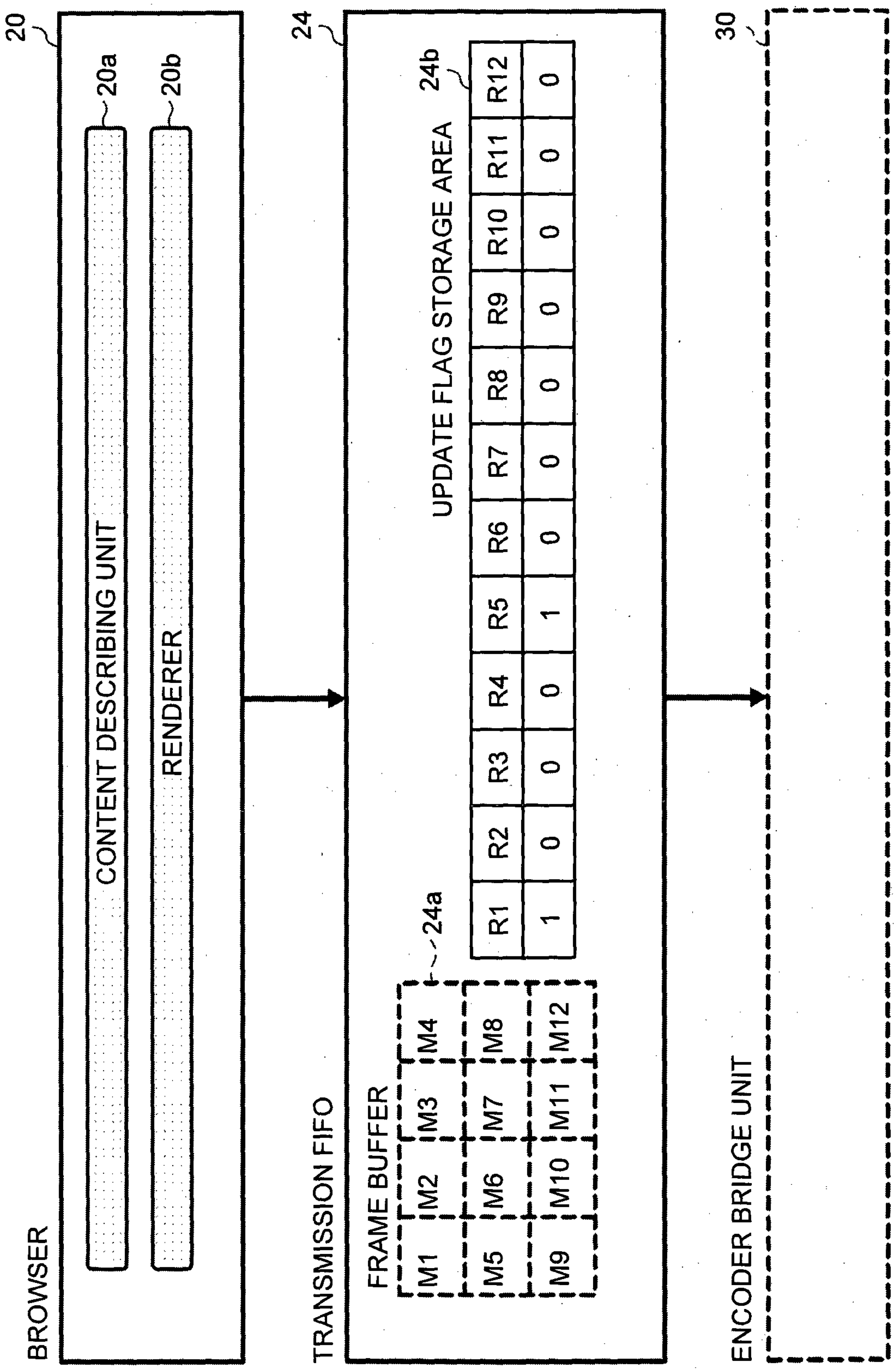
20
BROWSER
20a
CONTENT DESCRIBING UNIT
20b
RENDERER
24
TRANSMISSION FIFO
FRAME BUFFER
24a
M1
M2
M3
M4
M5
M6
M7
M8
M9
M10
M11
M12
UPDATE FLAG STORAGE AREA
24b
R1
R2
R3
R4
R5
R6
R7
R8
R9
R10
R11
R12
1
0
0
0
1
0
0
0
0
0
0
0
30
ENCODER BRIDGE UNIT

FIG.26

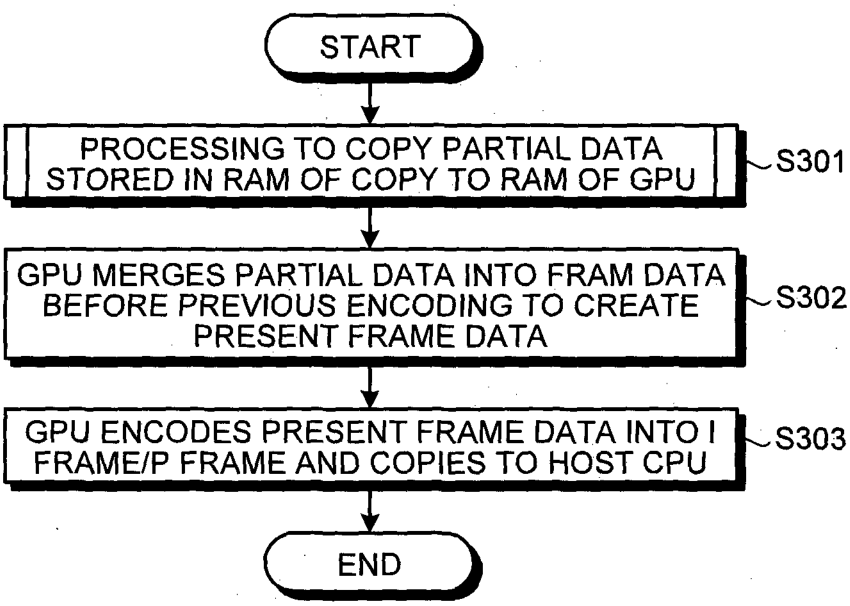
START
PROCESSING TO COPY PARTIAL DATA STORED IN RAM OF COPY TO RAM OF GPU
S301
GPU MERGES PARTIAL DATA INTO FRAM DATA BEFORE PREVIOUS ENCODING TO CREATE PRESENT FRAME DATA
S302
GPU ENCODES PRESENT FRAME DATA INTO I FRAME/P FRAME AND COPIES TO HOST CPU
S303
END

FIG.27

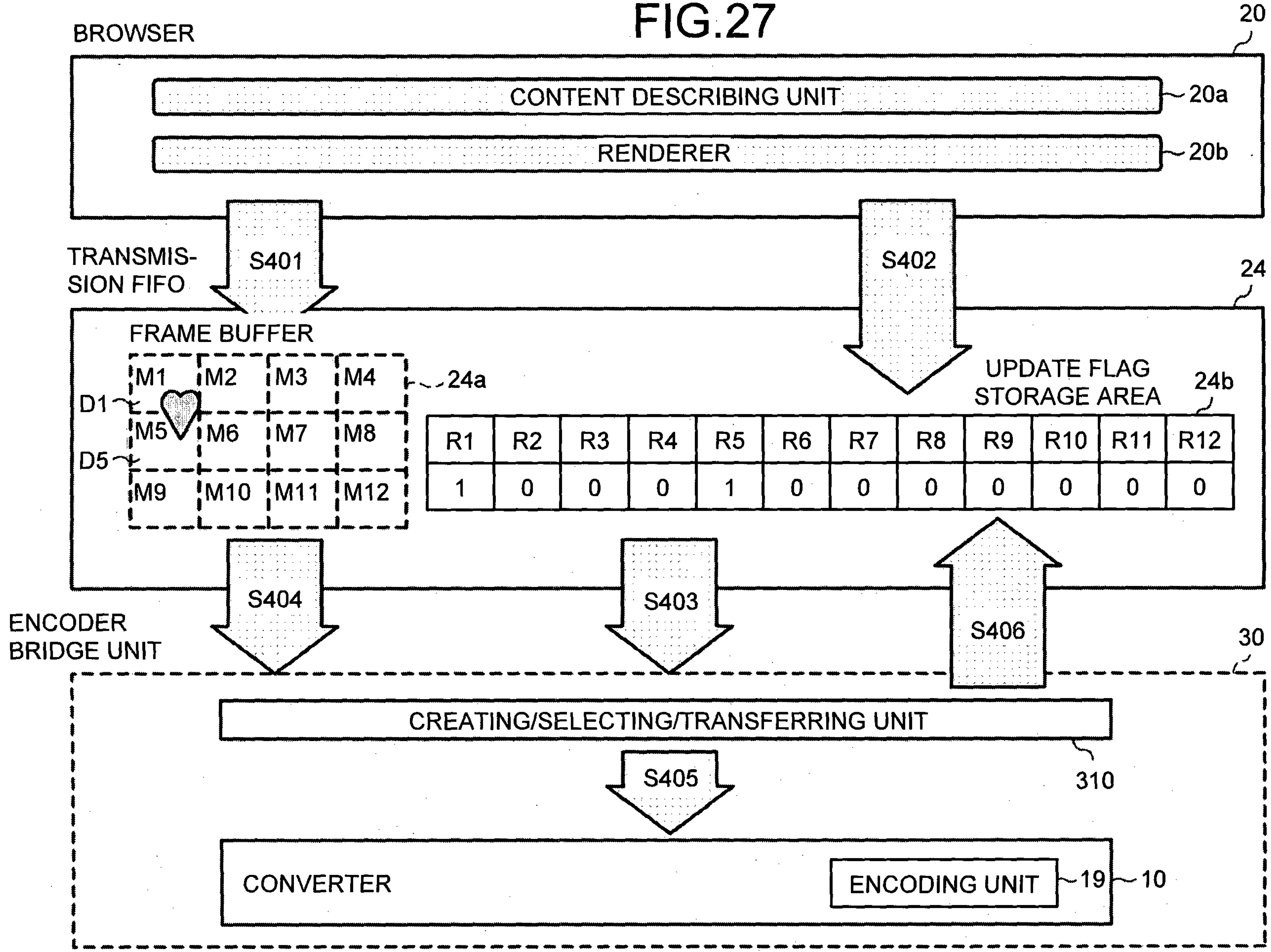
BROWSER
20
CONTENT DESCRIBING UNIT
20a
RENDERER
20b
TRANSMIS-
SION FIFO
S401
S402
24
FRAME BUFFER
M1
M2
M3
M4
M5
M6
M7
M8
M9
M10
M11
M12
24a
D1
D5
UPDATE FLAG
STORAGE AREA
24b
R1
R2
R3
R4
R5
R6
R7
R8
R9
R10
R11
R12
1
0
0
0
1
0
0
0
0
0
0
0
S404
S403
S406
ENCODER
BRIDGE UNIT
30
CREATING/SELECTING/TRANSFERRING UNIT
310
S405
CONVERTER
ENCODING UNIT
19
10

FIG.28

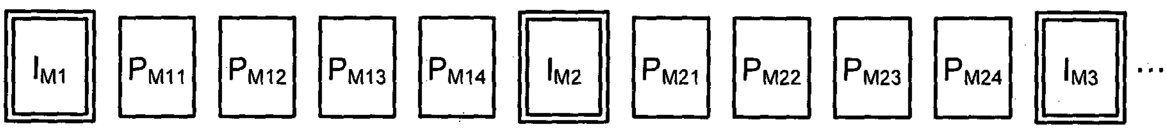

FIG.29

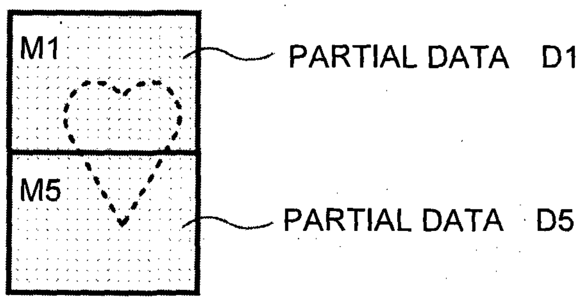
M1
M5
PARTIAL DATA D1
PARTIAL DATA D5

(a)

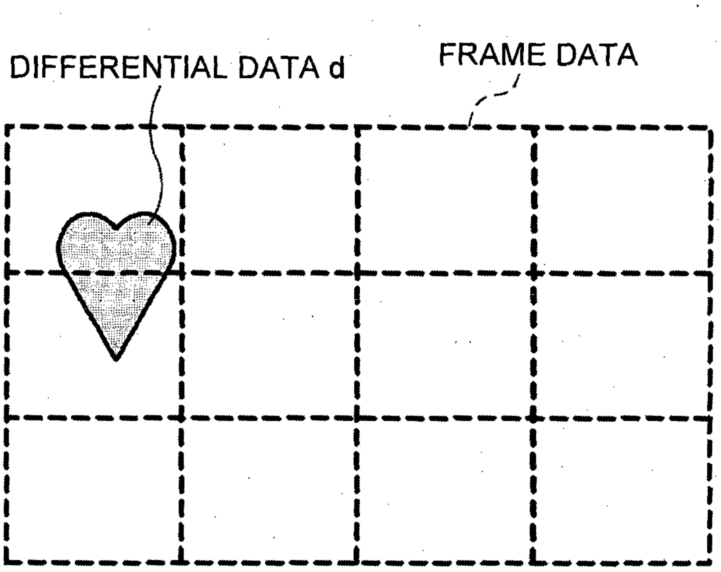
DIFFERENTIAL DATA d
FRAME DATA

(b)

FIG.30

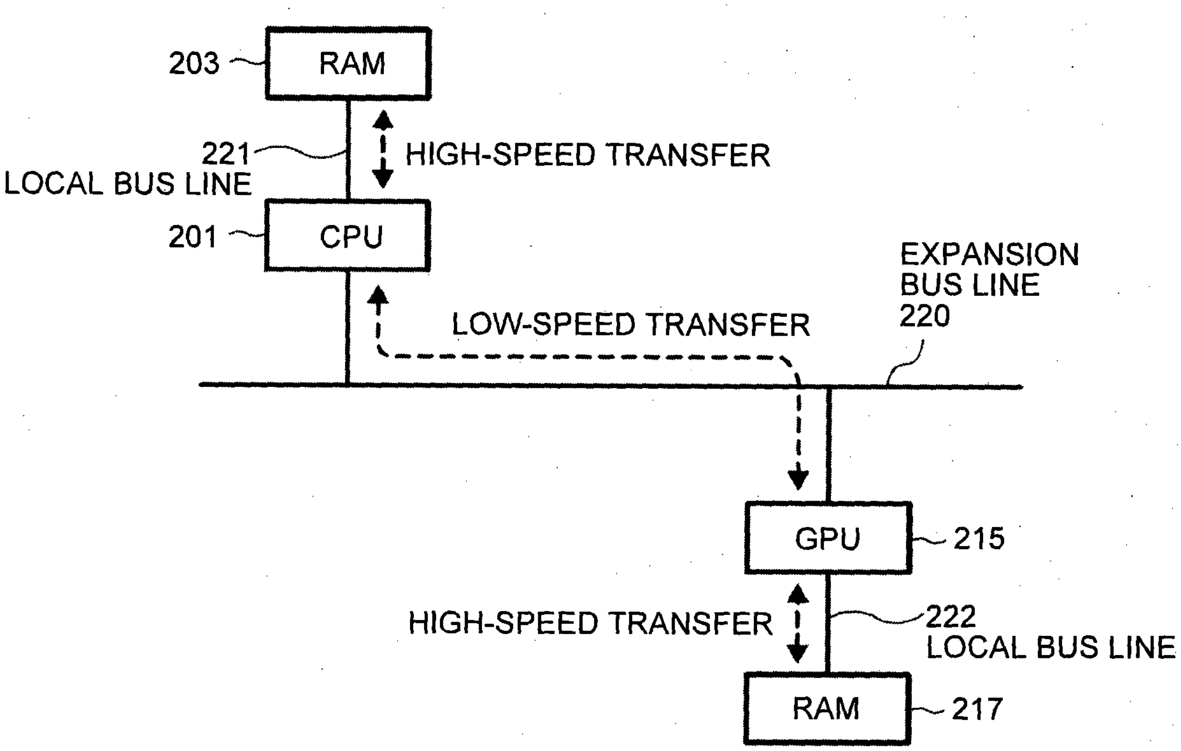
203
RAM
221
LOCAL BUS LINE
HIGH-SPEED TRANSFER
201
CPU
EXPANSION
BUS LINE
220
LOW-SPEED TRANSFER
GPU
215
HIGH-SPEED TRANSFER
222
LOCAL BUS LINE
RAM
217

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20080112489 A1